# EUROPEAN PATENT SPECIFICATION

(11) **EP 3 432 138 B1**
(45) Date of publication and mention of the grant of the patent: **28.09.2022**
(21) Application number: 17182383.4
(22) Date of filing: 20.07.2017
(51) Int. Cl.: G06F 8/41, G06F 11/34

(54) **A COMPUTER-IMPLEMENTED METHOD AND SYSTEM FOR COMPARING THE RESULTS ON A PLURALITY OF TARGET MACHINES OF MODIFICATION OF A REGION OF ORIGINAL CODE**
COMPUTERIMPLEMENTIERTES VERFAHREN UND SYSTEM ZUM VERGLEICH DER ERGEBNISSE EINER VIELZAHL VON ZIELMASCHINEN HINSICHTLICH DER MODIFIKATION EINER REGION EINES URSPRÜNGLICHEN CODES
PROCÉDÉ ET SYSTÈME INFORMATIQUE DE COMPARAISON DE RÉSULTATS SUR UNE PLURALITÉ DE MACHINES CIBLES DE MODIFICATION D'UNE RÉGION DE CODE D'ORIGINE

(43) Date of publication of application: 23.01.2019
(73) Proprietor: Fujitsu Limited, Kawasaki-shi, Kanagawa 211-8588 (JP)
(72) Inventor: ALDEA LOPEZ, Sergio, London, W13 9AS (GB)
(74) Representative: Haseltine Lake Kempner LLP

(56) References cited:
- US-A1- 2004 088 690
- US-A1- 2011 214 110
- US-A1- 2011 276 943
- US-B1- 6 738 967
- US-B1- 8 407 675
- US-B1- 8 656 380

## Description

The present invention relates to analysis and improvement of code/software and is applicable in at least High Performance Computing (HPC) environments.

Software (computer code) analysis, such as performance evaluation, optimization, or parallelization tasks for compiled software code may involve time consuming, trial-and-error processes, and, often, is very tedious, especially in those situations in which software code has to run on different machines/computers or hardware architectures. In the worst case scenario, if the programmer has not written the source code, and does not have experience in the different architectures, the software analysis task is rather complicated.

The present invention refers to machines and computers. The term "machine" is sometimes seen as a more general word, which usually refers to the hardware or form factor, hence encompassing not only what is usually understood under computer (desktops, servers, workstations), but also all sorts of intelligent devices: smartphones, tablets, loT devices, embedded systems, etc. Indeed, these devices are none other than computers with different form factors or specific hardware and all these different machines can be used for implementation of invention embodiments.

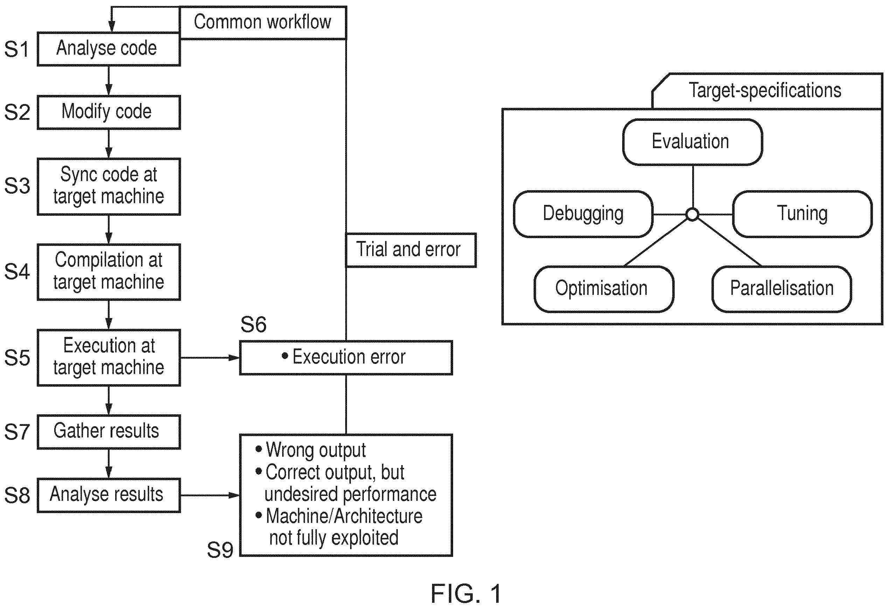

Figure 1 shows the common workflow that a programmer has to follow in order to achieve the mentioned tasks over different machines. After analysis in step S1 and any new modification to the code in S2, the programmer has to send or synchronise the changes to the target machines in which the code will be run (S3). Thereafter, it is usually necessary to compile that code for that specific machine (S4), which may hold a different hardware architecture. Execution in S5 may produce an error in S6, and no results. Otherwise results are gathered in S7 and analysed in S8 which corresponding outcomes in S9. This is a trial and error process to target the areas shown in evaluation, debugging, tuning, optimisation and parallelisation. This process is far from being optimised, especially if the programmer has to repeat the process for each target machine.

As an example of some of these tasks, choosing a scheduling policy for distribution iterations among threads, by using a shared memory system such as OpenMP, is not straightforward, especially if the programmer has to take into account different hardware architectures. These differences in the architecture could lead to different performance when running the software code. In order to reach a valid solution, the programmer would have to experiment with different scheduling policies and run (execute) the program in the different machines and/or hardware architectures he is expecting the program may run.

US 2011/214110 A1 discloses a compiler mechanism for handling conditional statements. US 2004/088690 A1 discloses a method for accelerating a computer application by recompilation and hardware customization.

The present invention is defined by the appended independent claims, to which reference should now be made. Specific embodiments are defined in the dependent claims.

According to an embodiment of a first aspect of the invention, there is provided a computer-implemented method for comparing the results on a plurality of target machines of modification of a region of original code, the method comprising: at a local machine, annotating a region of original code in a program for extraction with a compiler directive; distributing the program from the local machine to the target machines; at each target machine, compiling code including the original code and the compiler directive, generating executable code in the form of extracted code and instrumented code for each target machine, wherein the compiler directive causes the annotated region of the original code to be extracted to generate the extracted code, which is preferably stored in a separate file, and which is linked to a function call at a position in the original code from which the extracted region was extracted; modifying the extracted code at the local machine and sending the modification to the target machines, the modification triggering re-compilation of the modified extracted code at each target machine; at each target machine, generating a new executable version of the extracted code for dynamic loading into the instrumented program; and at each target machine, executing the instrumented program and dynamically loading and executing the new executable version of the extracted code and sending the results to the local machine, where the results are received and displayed for comparison.

Hence embodiments of the invention use remote compilation on a plurality of target machines to compare the results of a code modification.

The code (in the form of source code) is annotated with a compiler directive to extract a region of code at the local machine, for example by the user. Then the program with its annotation is distributed to the target machines. Each target machine compiles the code including the annotation. This compilation generates executable code including extracted code and instrumented code. The compiler directive allows the annotated region of the original code not only to be extracted but also to be stored (in a separate file from the instrumented code as an independent entity). This file is then linked to a function call to call the extracted code when required. Modification of the extracted code takes place at the local machine and the modification (whether the whole code including the modification or the modification on its own) is sent to the target machines and triggers recompilation of the modified extracted code. This generates a new executable version of the extracted code at each target machine which is loaded into the instrumented code when required (dynamically). This means that there is no need to recompile the whole of the program, but simply to recompile the extracted code. Also the extracted code may even be modified while its "parent" program (in the instrumented code version) is executing. Finally the results of the execution, perhaps in the form of output files in xml format for example are sent to the local machine from the target machines where the results are received and displayed to the user for comparison.

The re-compilation of the modified extracted code may comprise at the local machine: using compiler information for each target machine to create combinations of compiler options for each target machine; and sending the code modification to each target machine, along with the compiler option combinations for that target machine. Correspondingly, at the target machine, the re-compilation may comprise sending compiler information to the local machine (allowing the local machine to create combinations of compiler options for the target machine); receiving a code modification from the local machine, along with the compiler option combinations for the target machine; and compiling the modified code with each of the compiler option combinations to provide as many executable files as combinations.

Hence the compilation may be controlled remotely from the local machine. Also, use of the combinations may allow various different, or even all the possible combinations of compiler parameters to be tried with the code modification. The results of each combination (along with the combination and the code modification) may be saved to the repository described in more detail later. Alternatively a single suitable combination of compiler parameters may be sent and used.

The local machine (at which a program/user may be located) may be connected to the target machines over any suitable network such as an internal intranet or the internet.

The method may further comprise each target machine converting the extracted code back into its pre-compilation form after extraction, and saving the extracted code as an independent source code file for remote modification and for re-compilation before execution.

Conversion of the extracted code back into pre-compilation form allows easier modification, since the user may simply send the modification of the source code to each target machine.

The method may further comprise, during compilation at each target machine, instrumenting the remaining original code of the program to save starting and ending working sets, and after execution of the extracted code, saving starting and ending working sets.

The ending working sets are the primary results of the execution of course. The method may further comprise sending the starting and ending working sets from each target machine to the local machine and storing a reference to each target machine with the same starting and ending working sets as the local machine and storing any different starting and ending working sets with a reference to the particular target machine which produced the different starting and ending working sets.

In normal circumstances, it is expected that the working sets will be the same from each target machine (and from the local machine if it also executes the code). Thus there is no need to save these working sets separately and they may conveniently be stored as the expected value (i.e., that of the local machine) and reference to each target machine with this same value. Any different starting and ending working sets may be saved separately again with reference to the target machine which produced the value.

The method may further comprise, before any execution, sending a dataset for execution from the local machine to the target machine or sending a reference to a dataset already available at the target machine. Hence the dataset may already be available at each target machine.

The method may further comprise, at each target machine, instrumenting the extracted code to allow a concurrent user-controlled execution. Thus the user may control all of the target machines together in a step-by-step (instruction-by-instruction) execution or in an execution controlled in any other way by the user. The extracted code may be instrumented at each target machine also to capture one or more performance metrics. These metrics are then results that are sent to the local machine.

User-controlled execution may provide for one or more of the following options: applying changes to the code region; selecting an invocation of the extracted code; modifying a starting working set; changing a dataset for execution; and selecting different options for different target machines. Any of these options may be entered in a user interface at the local machine and sent to the target machines for implementation.

As mentioned above, the user controlled execution may return control to the user of execution at each target machine after each instruction executed.

Advantageously, a graphical user interface may display any information required to the user at the local machine. Thus the method may include displaying the extracted code region at the local machine. Furthermore, the method comprises displaying results at the local machine as one or more of: starting and ending working sets and one or more performance metrics for each target machine.

At the local machine, a code modification may be recommended to the user (before the step of modifying the code) by finding the similarity of the piece of code for optimisation to entities stored in a repository, entities in the repository comprising an original piece of code and a temporal sequence of modified versions of the code over time, each with a performance result; selecting from the repository one or more entities which are similar to the piece of code for optimisation; and generating a recommendation for code optimisation by comparing the performance results of the modified code versions in the temporal sequences of the similar entities to find a modification with the best results.

As mentioned previously, the local machine also sends compiler option combinations to the target machines with each code modification, so that results for each combination may be obtained through compilation and execution and all these results may be saved to the repository (either directly from the target machines or via the local machine), populating the repository with a wide variety of options for use in future recommendations.

A second aspect of the invention relates to the method at the local machine. According to an embodiment of the second aspect there is provided a computer-implemented method at a local machine for comparing the results on a plurality of target machines of modification of a region of original code, the method comprising: annotating a region of original code in a program for extraction with a compiler directive; distributing the program to the target machines; allowing compilation of code including the original code and the compiler directive, and generation of executable code in the form of extracted code and instrumented code at each target machine, wherein the compiler directive causes the annotated region of the original code to be extracted, to generate the extracted code, which is preferably stored in a separate file, and which is linked to a function call at a position in the original code from which the extracted region was extracted; modifying the extracted code and sending the modification to the target machines, triggering re-compilation of the modified extracted code at each target machine to generate a new executable version of the extracted code in each target machine for dynamic loading into the instrumented program; receiving from each target machine the results of the target machine executing the instrumented program and dynamically loading and executing the new executable version of the extracted code; and displaying the results of the target machines to allow determination of the effects of the modification on the results from the different target machines.

A third aspect of the invention provides a method at each target machine. According to an embodiment of the third aspect there is provided a computer-implemented method on a target machine to allow comparison of the results on the target machine of modification of a region of original code with the results of other target machines, the method comprising: receiving a program from a local machine, including a region of original code in the program annotated for extraction with a compiler directive; compiling code including the original code and the compiler directive, and generating executable code in the form of extracted code and instrumented code, wherein the compiler directive causes the annotated region of the original code to be extracted, to generate the extracted code, which is preferably stored in a separate file, and which is linked to a function call at a position in the original code from which the extracted region was extracted; receiving a modification of the extracted code, re-compiling the modified extracted code and generating a new executable version of the extracted code for dynamic loading into the instrumented program; executing the instrumented program and dynamically loading and executing the new executable version of the extracted code and sending the results to the local machine for comparison.

A fourth aspect of the invention provides a computer system comprising the local machine and a plurality of the target machines. According to this fourth aspect of the invention there is provided a computer system comprising a local machine and a plurality of target machines and operable to compare the results on the plurality of target machines of modification of a region of original code, wherein: the local machine comprises a user interface, and a local network interface controlled by a local processor, wherein: the user interface is to allow annotation by the user of a region of original code in a program for extraction with a compiler directive; the local network interface is to distribute the program from the local machine to the target machines; the user interface is to allow user modification of the extracted code, and to send the modification to the target machines; and to receive the results of execution at each target machine; the user interface is to allow the selection of one or more options that are sent to the target machines, in the form of a particular invocation of the extracted code, a modification of the starting working set, and a change of the initial dataset of the program; and the user interface is to present the results for comparison by the user; each target machine comprises a compiler, a target network interface and a target processor, wherein: the target network interface is to receive the program, including annotation by the user of a region of original code in a program for extraction with a compiler directive; the compiler is to compile code including the original code and the compiler directive, to generate executable code in the form of extracted code and instrumented code, to use the compiler directive to cause the annotated region of the original code to be extracted to generate the extracted code, which is preferably stored in a separate file, and which is linked to a function call at a position in the original code from which the extracted region was extracted; the target network interface is to receive a modification of extracted code from the local machine; the compiler is to recompile the modified extracted code when triggered by receipt of the modified extracted code and to generate a new executable version of the extracted code for dynamic loading into the instrumented program; the target processor is to execute the instrumented program and to dynamically load and execute the new executable version of the extracted code; and the target network interface is to send the results to the local machine for comparison.

A fifth aspect of the invention relates to the local machine. According to an embodiment of the fifth aspect there is provided a local machine operable to compare the results on a plurality of target machines of modification of a region of original code, wherein: the local machine comprises a user interface and a local network interface controlled by a local processor, wherein: the user interface is to allow annotation by the user of a region of original code in a program for extraction with a compiler directive; and the local network interface is to distribute the program from the local machine to the target machines allowing compilation of code including the original code and the compiler directive, and generation of executable code in the form of extracted code and instrumented code at each target machine, wherein the compiler directive causes the annotated region of the original code to be extracted to generate the extracted code, which is preferably stored in a separate file, and which is linked to a function call at a position in the original code from which the extracted region was extracted; the user interface is to allow user modification of the extracted code, to send the modification to the target machines; and to receive the results of execution at each target machine; the user interface is to allow selection of one or more options that are sent to the target machines in the form of a particular invocation of the extracted code, a modification of the starting working set, and a change of the initial dataset of the program; and the user interface is to display the results for comparison by the user.

The local machine may further be to automatically recommend a code modification, the local processor further being to: find the similarity of the piece of code for optimisation to entities stored in a repository, entities in the repository comprising an original piece of code and a temporal sequence of modified versions of the code over time, each with a performance result; select from the repository one or more pieces of code/entities which are similar to the piece of code for optimisation; and generate a recommendation for code optimisation by comparing the performance results of the modified code versions in the temporal sequences of the similar entities to find a modification with the best results.

Furthermore, the local machine processor may further be to use compiler information for each target machine to create combinations of compiler options for each target machine, and the local network interface may be to send the compiler option combinations for each target machine to the target machine along with the code modification.

A sixth aspect of the invention relates to the target machines. According to an embodiment of the sixth aspect there is provided a target machine to allow comparison of the results on the target machine of modification of a region of original code with the results of other target machines, wherein: the target machine comprises a compiler and a target network interface controlled by a target processor, wherein: the target network interface is to receive a program, including annotation by the user of a region of original code in the program for extraction with a compiler directive; the compiler is to compile code including the original code and the compiler directive, to generate executable code in the form of extracted code and instrumented code, to use the compiler directive to cause the annotated region of the original code to be extracted to generate the extracted code, which is preferably stored in a separate file, and which is linked to a function call at a position in the original code from which the extracted region was extracted; the target network interface is to receive a modification of the extracted code from the local machine; the compiler is to re-compile the modified extracted code when triggered by receipt of the modified extracted code and to generate a new executable version of the extracted code for dynamic loading into the instrumented program; the target processor is to execute the instrumented program and to dynamically load and execute the new executable version of the extracted code; and the target network interface is to send the results to the local machine for comparison.

The target network interface may further be to send compiler information to a local machine, allowing the local machine to create combinations of compiler options for the target machine, and to receive the compiler option combinations for the target machine along with the modification of the extracted code. In this case the compiler is further to re-compile the modified extracted code with each of the compiler option combinations to generate as many executable files as combinations for dynamic loading into the instrumented program

An apparatus or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention may be implemented in digital electronic circuitry, or in computer hardware, firmware, software, or in combinations of them. For example, the target machine may be an loT device such as a sensor, as discussed in more detail hereinafter. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results. Multiple test script versions may be edited and invoked as a unit without using object-oriented programming technology; for example, the elements of a script object may be organized in a structured database or a file system, and the operations described as being performed by the script object may be performed by a test control program.

Elements of the invention have been described using the terms "processor", "compiler", "interface" etc. The skilled person will appreciate that such terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will now be described, purely by way of example, with references to the accompanying drawings, in which:-
Figure 1 is a flow diagram and action network for code modification;
Figure 2a is a flow chart representing an overall method;
Figure 2b is a flow chart of a method at a local machine;
Figure 2c is a flow chart of a method at a target machine;
Figure 3a is a block diagram of a system;
Figure 3b is a block diagram of components of a local machine;
Figure 3c is a block diagram of components of a target machine;
Figure 4 is a functional diagram of a code modification process;
Figure 5 is an extended version of Figure 4 describing how the possible recommendations and individual compilations fit within the context of this embodiment;
Figure 6 is an overview of a method of comparing results of code modification;
Figure 7 is an overview of the local and target machines and their connection;
Figure 8 is a high level flow chart describing the details of an embodiment in the whole system, including code modification;
Figure 9 is a flow chart of a method followed at the target machine;
Figure 10 is a flow chart of a method followed at the local machine;
Figure 11 is a diagram of (a) an original code region annotated to be extracted, (b) the extracted code region as a function in an independent file that may be dynamically loaded, and (c) the instrumented code in which the code region has been replaced with a function call to the extracted code;
Figure 12 shows modifications to a generic compiler architecture in order to achieve the extraction of code marked by the compiler directive, and the instrumentation of the original code;
Figure 13 is a flow chart of a compilation process to extract the targeted code and instrument the original program to include additional functionalities;
Figure 14 is a flow chart of a user-controlled run of the extracted code at the target machine;
Figure 15 is a flow chart of a user-controlled run of the extracted code at the local machine;
Figure 16 is a flow chart describing a process to compile and execute an extracted code region at each target machine;
Figure 17 is a flow chart describing a process to compile and execute an extracted code region at the local machine;
Figure 18 is an example of (a) code region annotated to be extracted, (b) the extracted code region as a function in an independent file that may be dynamically loaded and (c) the instrumented code in which the code region has been replaced with a function call to the extracted code;
Figure 19 shows the original extracted code (a), the modified extracted code applied (b), and the different values set for each target machine;
Figure 20 shows the execution time of the extracted loop in all target machines with specific settings for each run;
Figure 21 shows the distribution of iterations of the loop shown in Figure 19 when executing a different number of OpenMP threads, and applying different scheduling policies: static, dynamic, and guided; and
Figure 22 is a diagram of suitable hardware for implementation of invention embodiments.

In order to save some time during evaluation and debugging processes, different isolation techniques have been proposed. These techniques allow extraction of a certain region/piece of code from the parent application with the main goal of accelerating the evaluation, debugging and tuning processes. These techniques, usually tied to checkpointing mechanisms (to save the state of the program before the execution of the extracted piece of code), allow re-execution of the piece of code without executing the whole parent application from the beginning. Although most of these approaches enable the modification of the extracted source code, they do not keep this code as an independent file. Furthermore, the inventor has come to the realisation that they would not allow an interactive modification of the code and its working set, on a user-controlled execution of the code while visualising different types of metrics that characterise both the code and its execution over the working set.

Also, there is no solution to the problem earlier described, which requires a piece of code to be extracted in a local machine, the programmer to apply changes to that code, and thereafter, to test these changes on a set of several machines and/or hardware architectures.

If the programmer needs to apply some of the earlier described tasks, e.g. optimisation, over different machines and/or architectures, the programmer would have to use the method described in each machine independently. This incurs several inefficiencies, including the need to reproduce all the code changes in all the machines, compiling the corresponding code in each target machine independently, and later, running the resulting executables in the same fashion. Finally, the programmer would have to gather the results in order to have a holistic view of how the changes have affected the software code over different machines and/or architectures. Overall, this is a rather inefficient process.

In order to solve this problem, the inventor has come to the realisation that a solution is required to load a region of code as a block/in one action in a way that is seamless and transparent at least from the user's perspective, on different machines, which could potentially have different architectures.

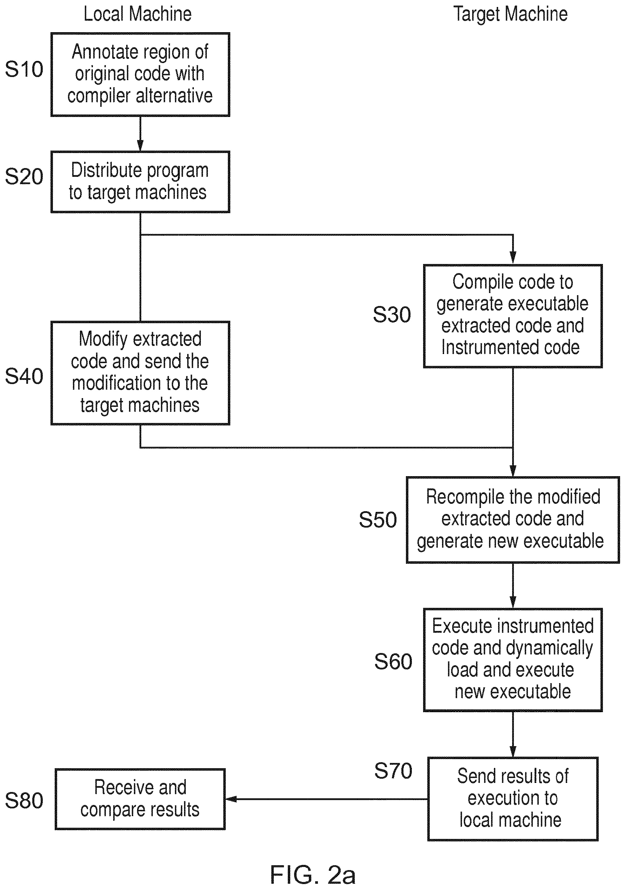

Figure 2a shows a flow diagram of an overall method which takes place on a local machine and a plurality of target machines. There is no particular limitation to the number of target machines. The range may vary widely, depending on the installation. The connection could only be between computers in a particular cluster, or accessing computers from multiple clusters, or even multiple loT devices at different locations if needed.

Taking machine in the broadest sense of the word as defined above, invention embodiments may be applied to any intelligent devices, e.g.: smartphones, and devices, sensors etc. with intelligence capability (e.g. in the loT scenario the intelligent fridge, the intelligent curtain closer, remote heat control capability etc.) which could act as the target machines in this context. Thus embodiments encompass a broader interpretation of machines, and are not limited to the more limited sense of a computer as a desktop- or laptop computers or servers, for example.

In step S10 on the local machine, the original code in a program is annotated with a compiler directive. In step S20 the program (including the annotation) is distributed to target machines. The distribution may take place for example over a network such as the internet or over a private network or even locally. In step S30 at the target machines the code is compiled and this generates an executable extracted code and an instrumented code as a result of the compiler directive. In step S40 on the local machine, the extracted code (in source-code form) is modified and the modification is sent back to the target machines.

Note that the extracted code which is to be modified may be obtained from the target machines or the local machine may create its own extracted code by carrying out the same compilation process S30 locally (and then potentially converting the extracted code back into its pre-compilation form).

In step S50 on the target machines, the modified extracted code is re-compiled and this generates a new executable. In step S60 the program executes. The instrumented code executes until it reaches a function call which dynamically loads and executes the new executable. This may take place for every invocation of the extracted code in the program if it is invoked more than once. In step S70 the results of the execution are sent to the local machine. Results may take the form of the ending working set for example and any other suitable output. In step S80 the local machine receives the results from the target machines and compares the results.

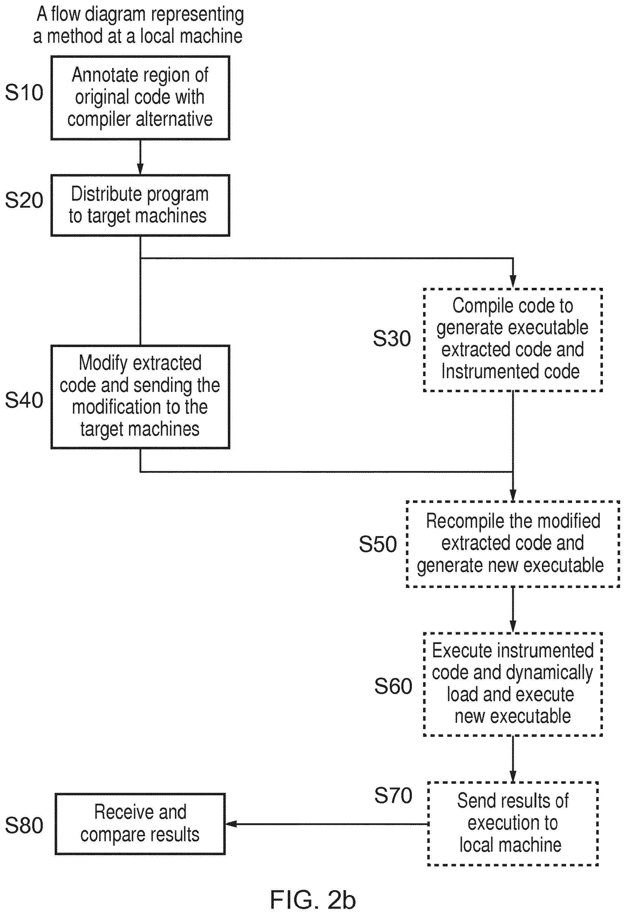

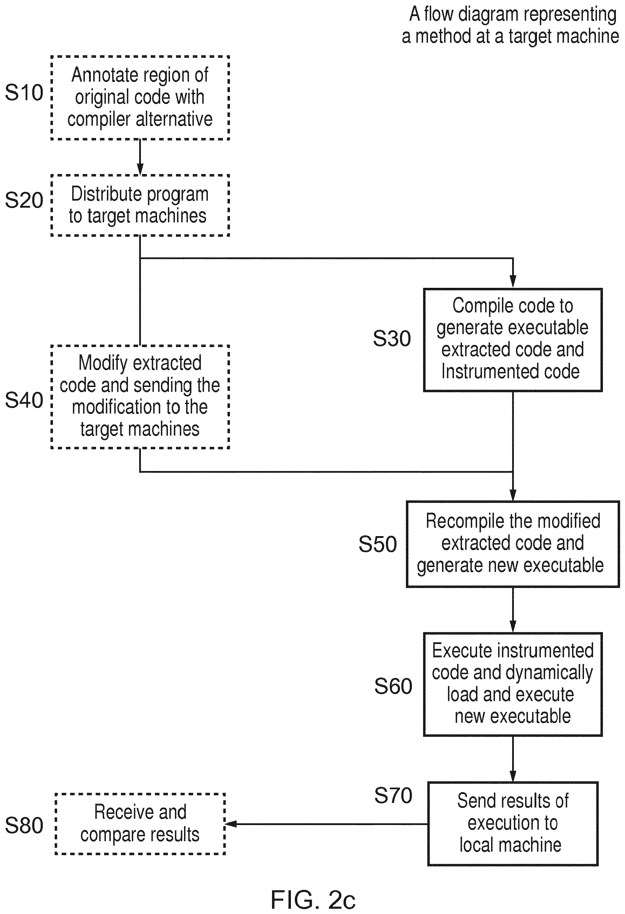

Figure 2b is a flow diagram of the method at the local machine, with the target machine steps shown in dashed boxes for reference. Figure 2c is a flow diagram of the method carried out at the target machines. All the steps of the local machine are shown in dashed boxes and the steps in both figures are the same as those described for Figure 2a.

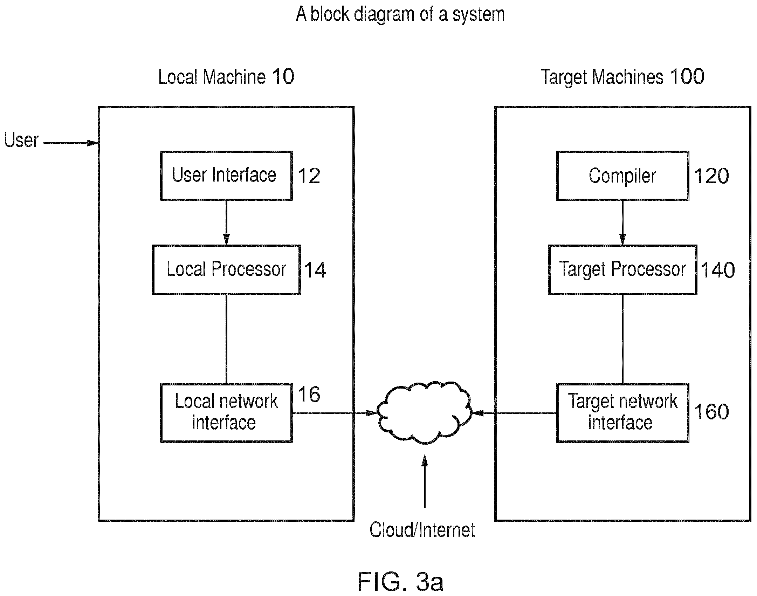

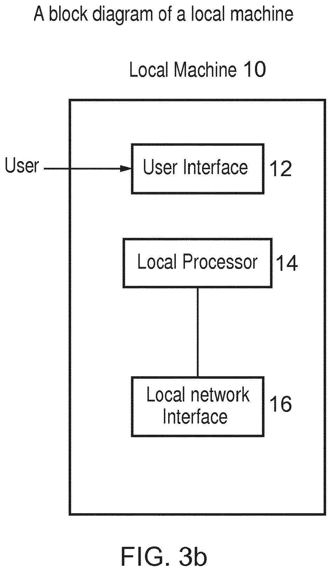

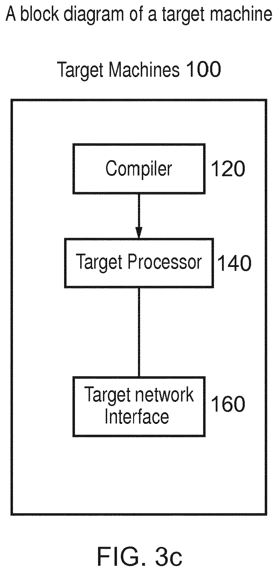

Figure 3 is a block diagram of a system including a local machine and a plurality of target machines. The system is operable to provide the results of code modification on a plurality of target machines. The local machine 10 includes user interface 12, processor 14 referred to as a local processor and a network interface 16 referred to as a local network interface. The target machine 100 includes compiler 120, a processor 140 referred to as a target processor, and network interface 160 referred to as a target network interface. The local machine and target machine may communicate via the local and target network interfaces for example over the internet.

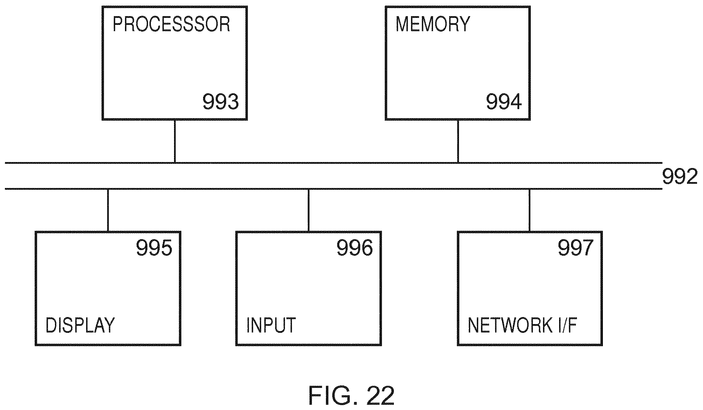

Each machine is essentially a computer and may of course comprise other standard components of a computer as shown in Figure 22. In the local machine, a processor controls the user interface to allow annotation by the user of the original code. This annotation indicates with a compiler directive that a code region (or piece of code: the terms are used synonymously) is for extraction. The processor also controls the network interface 16 to send the program with its annotation to the target machines. Each target machine has a processor 140 which controls its network interface 160 to receive the program including annotation. The processor 140 also controls compiler 120 to compile the code which generates executable code in the form of an extracted code and instrumented code. The compiler directive causes the annotated region to be extracted and stored in a separate executable file which is linked to a function call in the original code.

Turning to the local machine, the processor 14 controls the user interface 12 to allow user modification of the extracted code (by directly amending the original version or by amending using an interface/visualisation which is easier for the user to read). The user interface also allows the user to select options to be sent to the target machines for the code execution, such as a modified storing working set, a particular invocation and change of the database. The processor controls the network interface to send the modification (perhaps in the form of a patch file) to the target machines and subsequently to receive the results of the execution of the target machines.

At the target machines the target processor 140 controls the network interface to receive the modified extracted code (or just the modifications) and then controls the compiler 120 to re-compile it and to generate a new executable for dynamic loading into the instrumented program. The program may then execute the instrumented program and dynamically load and execute the new executable, sending the results to the local machine for comparison.

The results of the execution could take several forms, especially if different profilers are used to gather information about the execution. However, the embodiments ensure that at least the ending working sets (values of the output parameters of the extracted code) are sent back to the local machine. In order to obtain performance results, the embodiments may include augmenting the code and/or linking it to different profilers in order to provide different metrics.

Figure 3b shows the components of the local machine only, with the functionality as explained above. Figure 3c shows the components of the target machines only, with the functionality also as described above.

Invention embodiments may allow the remote modification, compilation (for every different machine), loading, and concurrent running of a region/piece of code (i.e., part of a program, rather than the entire program - however it could be the entire working part of a program over two or more machines potentially with different architectures, while enabling its re-execution without having to recompile the parent program/application for each different machine. Embodiments may, at the same time, provide an interactive interface to change different parameters of the extracted code (such as working set, invocation), test target-specific changes, and change the code itself. Embodiments may also allow the visualisation of both the extracted region of code and its different performance metrics over the different machines (and architectures), as well as a condensed visualisation of the performance metrics.

As an aside, Virtual machines may act as target machines, especially if connected to the network. From the local machine, a virtual machine of this kind would be seen as a normal single target machine. The virtualisation encapsulates the hardware. In any case, the performance results of the programs would differ between different virtual machines.

As a result of the method described herein, a programmer may easily load regions of code in the same step (physical components) on to different hardware machines, potentially with different hardware architectures, while testing changes on the code at the same time over those machines. The emphasis in embodiments is the fact that the target machines may have different (hardware) architectures, but of course the differences may be also at software level, and binary (executable) files may be generated for both different hardware architecture and software architecture in the form of different lower levels of software stacks (OS, libraries, compilers, etc.), Indeed different combinations of compilation-time and/or execution-time options may be generated, compiled and executed, for example as used in the recommendation system and concurrent compilation detailed herein.

According to a specific embodiment, the programmer may easily apply modifications to the code using code in a repository. Embodiments provide a list of codes similar to the piece of code being currently modified, together with a temporal record of modifications and their performance for each one of the codes returned. This list may be used by the programmer to apply the modifications that are recorded as the most successful, in terms of performance or other metrics such as memory consumption. The embodiment may recommend code from the list according to the performance metric(s).

Another specific embodiment sends the modifications of the software codes to different machines, together with starting set values and any other target-specific parameters needed for the compilation and allow execution of the resulting compiled software code.

The benefits of embodiments are shared among different potential applications, for which any of the processes of optimisation, evaluation, tuning, or simply testing a piece code over different HPC machines, are rendered more agile, thereby increasing aggregate productivity, In short, the time spent in developing different versions of a region of code and the comparison of their outcomes may be drastically cut.

Embodiments may be used by any employee who has to develop new source code, use or update existing code, or has to apply changes, tune or evaluate this code over different machines and/or architectures.

Invention embodiments may be applied into a cloud solution, where access to the different machines and hardware architectures is facilitated by the cloud. Either or both of the local machine and the target machines may be provided on the cloud. Embodiments of the invention may alternatively be used as a standalone solution, as a development tool for any programmer. Moreover, the methodology may be extended to be used with different profiling (code analysis) tools in order to increase the amount of information provided, combining the information gathered from the execution of a program over different machines and/or architectures.

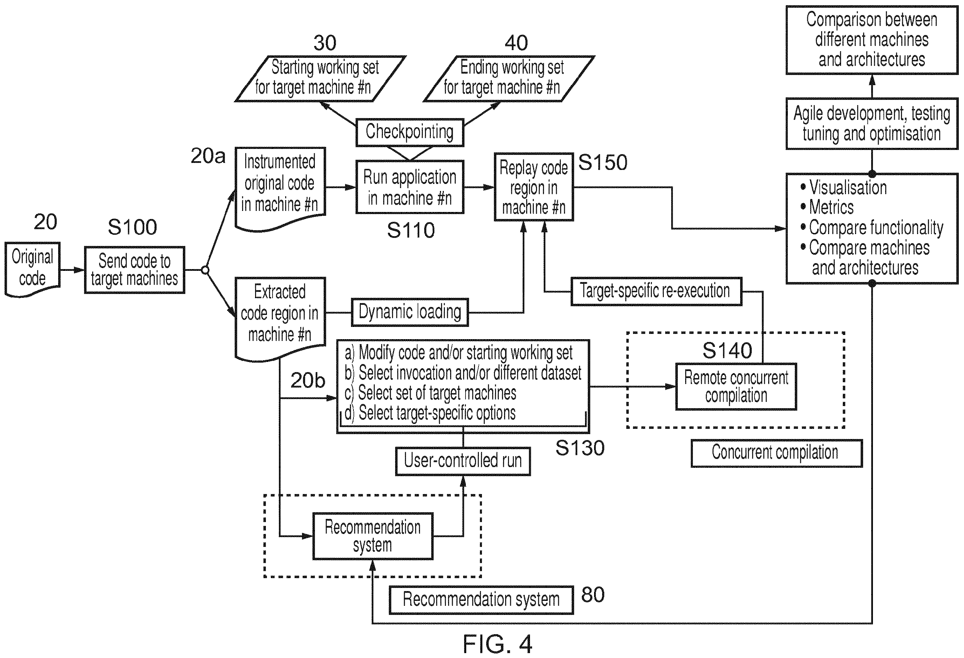

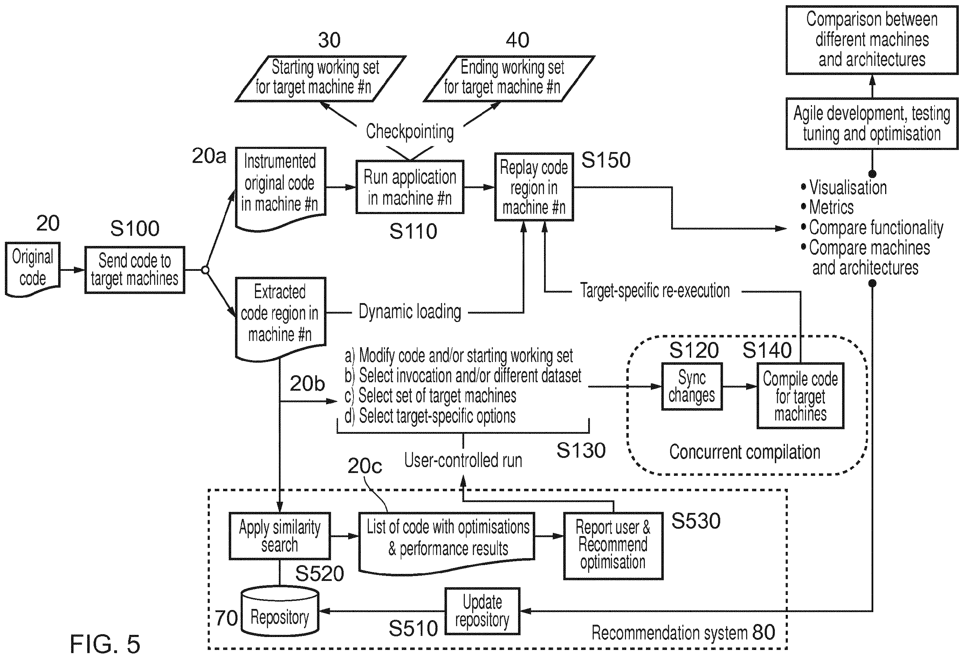

Embodiments provide a computer-implemented method allowing remote modification, compilation, and testing of a region of original software code for several machines. Figures 4 and 5 show an overview of some invention embodiments from the point of view of the functionality.

Embodiments may allow the remote modification, compilation (for every different machine), loading, and concurrent running of regions of code over several machines and/or architectures, while enabling re-execution of a code region without having to recompile the parent application for each different machine, and at the same time may provide an interactive interface to change different parameters of the extracted code (working set, invocation), test target-specific changes, and change the code itself.

Given an original software code, one embodiment starts with the distribution of a copy of this code to every target machine in which the code will be tested. Then, at each target machine, including the local machine from which the whole process is initiated, this software code is compiled, while extracting a certain piece of code to be modified at the local machine. Following possible recommendations extracted from a repository of temporal records of code snippets and performance of their different versions and implementations, the user applies several modifications to the code. Then, the embodiment allows for the re-execution of that particular piece of code, not only at the local machine, but also at every target machine, transferring the modifications and effectively doing a specific compilation for each one of them.

At every target machine, the state of the program before and after the execution of each invocation of the selected code region (working sets) is captured, which allows the re-execution of each particular invocation, considering the differences that its execution could have at each machine (for example, if the execution flow depends on the architecture underneath). As part of this method, these states may be interactively modified, before re-executing the code, from the local machine, independently of these states being local or remote.

Turning specifically to Figure 4, which is a functional diagram of a code modification process spread across different target machines, original code 20 is sent to the target machines in step S100. Compilation divides the code into instrumented original code 20a and extracted code 20b. Machine #n is shown to indicate that there are a number of different target machines. The application is executed or (or run which is used as a synonym for executed in this document) in a capture execution in step S110 with checkpointing to allow the provision of a starting working set for that target machine and an ending working set for that machine.

In order to "replay" the extracted code region on the machine in step S150 the extracted code is dynamically loaded into the instrumented code. This takes place both in the first checkpointing capture execution and in all subsequent executions for example, in a user controlled run as shown in step S130 with options a) to d) which are described in more detail later.

A recommendation system 80 may be used to select one or more options to modify the code. Following modification, the extracted code must be re-compiled in step S140, (potentially including remote concurrent compilation) before replaying in step S150. Results across the different machines may be visualised, metrics may be produced, functionality may be compared and this will allow comparison of a different machines and architectures as necessary. These outcomes of the method may permit agile development testing, tuning and optimisation and allow comparison of different machines and architectures.

Figure 5 is an extended version of Figure 4 describing how the possible recommendations and individual compilations fit within the context of this embodiment and only the additional functionality is described below.

A search for similar code to the extracted code 20b is used in S520 to look in repository 70 of codes 20c in which each entity includes an original code and a temporal sequence of code versions with modifications from the previous version and their performance results. The similarity search gives a list of entities which are similar to the extracted code (usually based on the original code in the entity). Comparison of the performance results of the various code versions in the similar entities allows generation of a recommendation in S530. This allows a report to the user of the recommendation for use in selecting any of options a) to d). The repository may be updated in step S510 using the results of the method. In the compilation phase, the code changes in the code or other parameter are synchronised to the target machines in step S120 (for example by sending a patch file of the modification) and the modified code is compiled at the target machines in step S140 using compiler parameters which may be sent from the local machine. These two steps are described in more detail later.

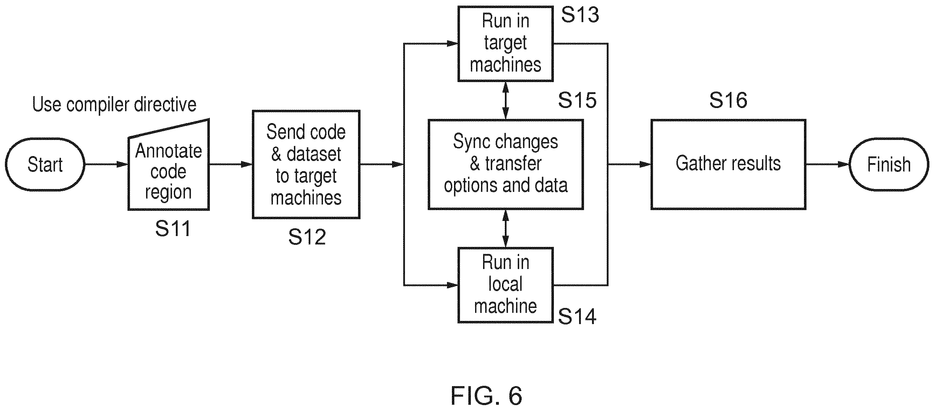

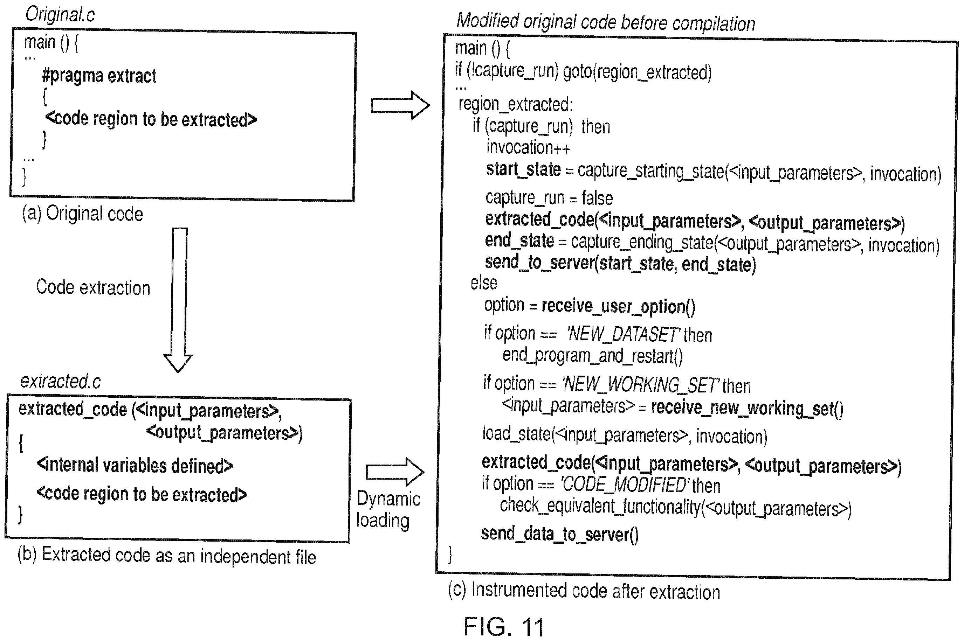

Figure 6 shows a high level description of the method of one embodiment. Given a certain software code, the user annotates a specific piece of code, or code region in S11, by using a modified version of the compiler directive (#pragma extract) as shown in Figure 11(a). Once the software has been annotated, the system first sends the software code to every target machine in S12, where it proceeds to compile it, generating an executable code (program or application) for each specific target machine.

Note that the user has previously configured the target machines, which are prepared for implementation of this embodiment, and the compiler and libraries are correctly set up. Set up entails the installation and configuration of the compiler, libraries, etc. that will be used at the target machines. Embodiments assume that at least a minimal functional environment is in place, which includes OS, compilers, any (links to) development libraries required, etc.

Moreover, the system captures the state of the program (working sets) before and after the execution of each invocation of the selected code region at every target machine, and the local machine.

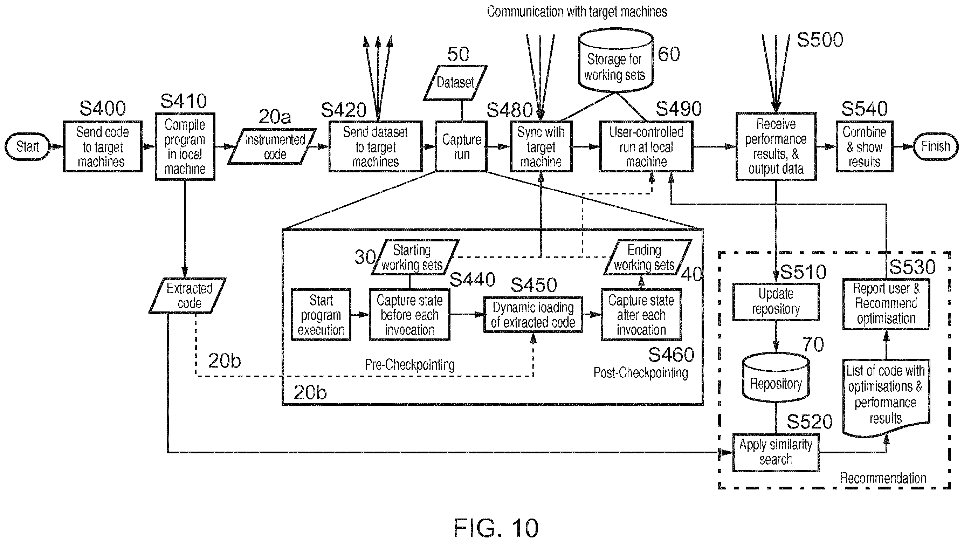

While the executable is running in every machine (or at least in every target machine in S13 and optionally S14), the extracted piece of code is modified at the local machine, as shown in Figure 10. Those changes are then sent to and applied in every target machine S15, triggering the re-compilation of the modified extracted piece of code for each target machine, generating different executable codes, which are dynamically loaded into the parent program while it is running in each target machine. This loading does not need to restart the execution of the parent program. After the piece of code has run and finished at every target machine, performance results are sent and gathered at the local machine S16, providing meaningful information to the user.

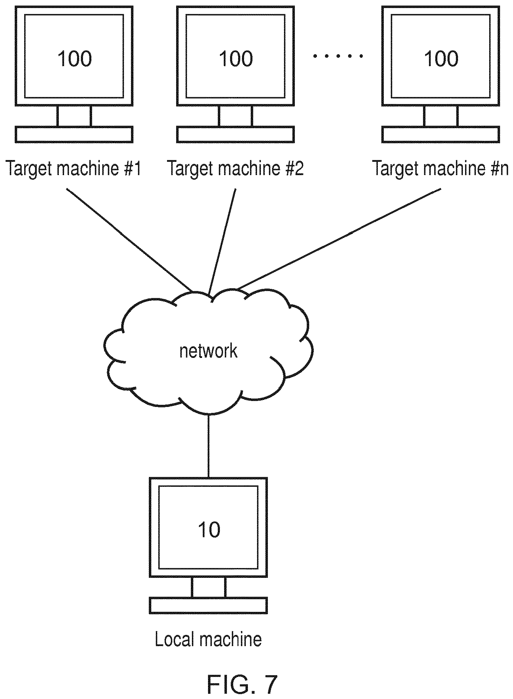

Figure 7 depicts how the target machines and the local machine are connected. Local machine 10 is linked via a network to target machine #1, #2 and all other target machines such as #n.

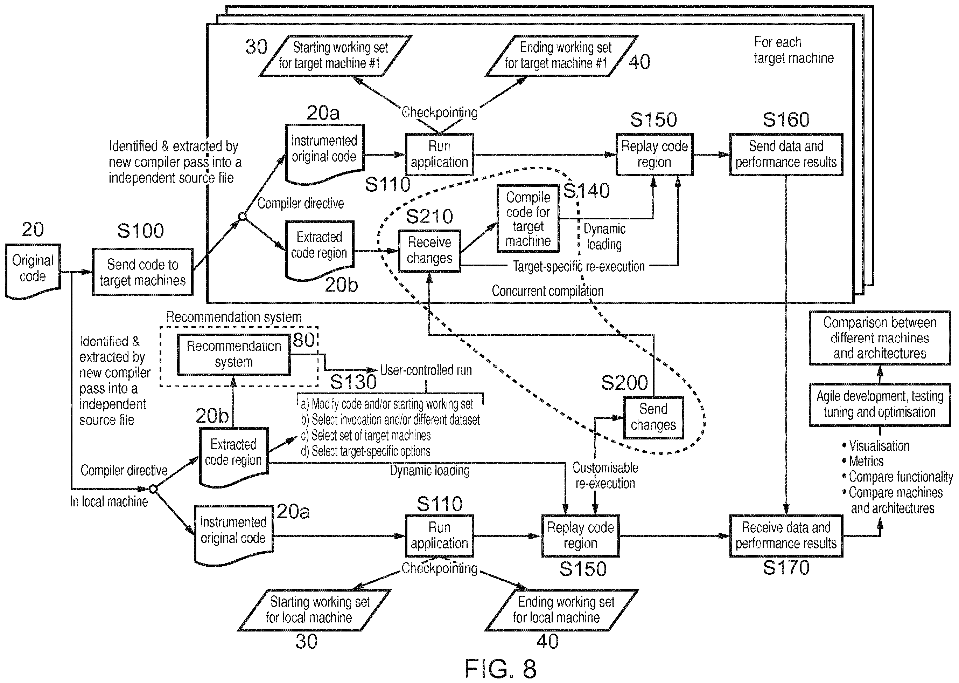

Figure 8 is a flow chart describing the details of an embodiment in the whole system, including steps at the local machine and target machines and the transfer of code modifications. The figure has a similar overall structure to Figures 4 and 5, and description of previously mentioned steps and features is omitted. Figure 8 additionally shows the compilation and execution process taking place at the local machine (in the lower half of the figure) as well at the target machines (in the upper half), the sending and receipt of the data and performance results at the local machine in steps S160 and S170 and the details of concurrent compilation. In concurrent compilation, changes to the code are sent (with compilation and other execution-time parameters as necessary) in S200 from the local machine and received at the target machines in S210, which allows compilation to take place in S220, before dynamic loading into the code replay. Different combinations of execution-time parameters for the modified code may be sent from the local machine, allowing compilation and execution of the modified code with each combination. The results (including performance results) of execution of each combination may be stored in repository 70 of the recommendations system described below.

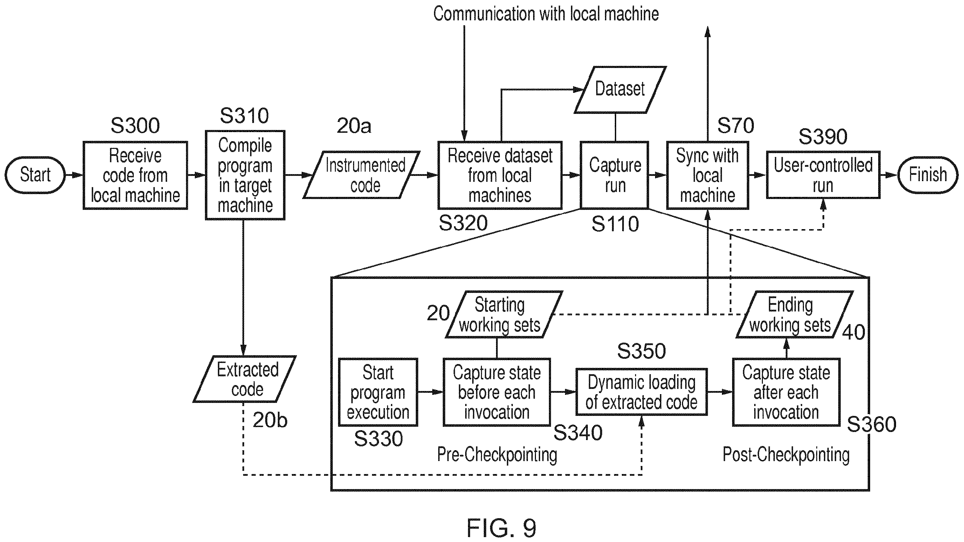

Figure 9 and Figure 10 describe the process followed at each target machine, and the local machine, respectively. The process at each separate target machine starts with the reception S300 of the software code from the local machine. Then compilation S310 starts, generating an instrumented code 20a, and an extracted code 20b, as shown in Figure 11(b). This instrumented code is run in capture run S110 after receiving S320 the dataset from the local machine. This process could be done asynchronously, prior to the execution of the system, in which case the program would simply reference the dataset needed, which would be already available in the target machine. As described later, if the user decides to change the dataset, the process will go back to this point before the capture run.

Here, the executable generated by the compiler is run once to capture the value of the different variables and data structures (such as the state of the program before executing the extracted code) used within the extracted code before the code is executed in user-controlled run S390.

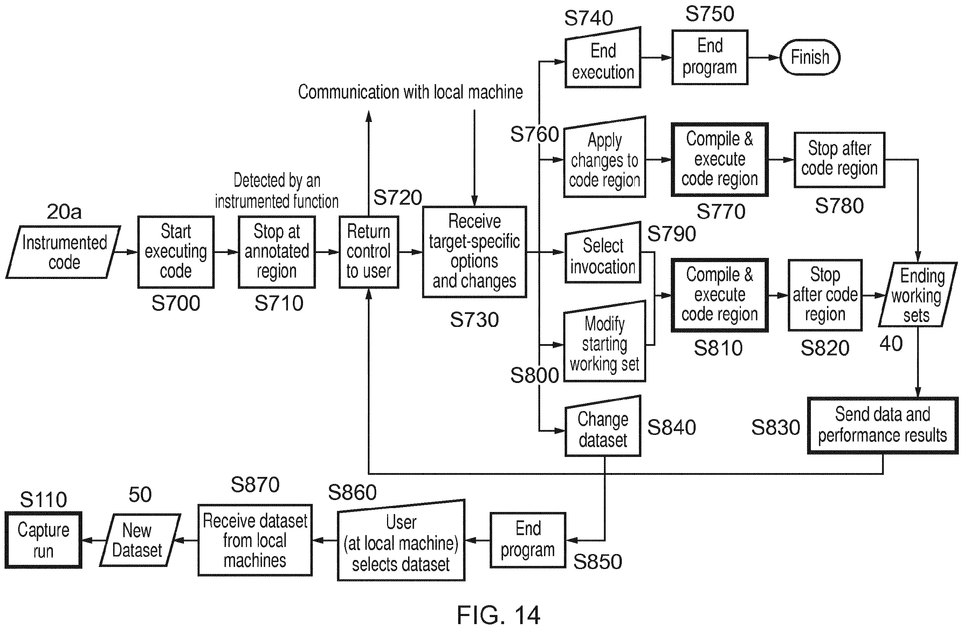

As a result, the application starts executing in S330 until the extracted code is reached, as Figure 11(c) depicts. At this point, the values of the variables and data structures required to execute the extracted code region are saved in S340, building a starting working set 30. Then, the extracted code is dynamically loaded into the application S350, and when its execution finishes, the values of the variables and data structures that have been written within the extracted code (and hence could be used afterwards) are also saved (S360) creating an ending working set 40. Both working sets will be used during the user-controlled run, described in Figure 14 and explained later. Since the saved working sets may be modified from the local machine, they are sent to the local machine, which saves these values in a smart way, removing those with duplicate values, and keeping only the references to the target machines in which they were generated.

Figure 10 shows the corresponding method on the local machine. At the local machine the process is similar to the one described for the target machines. The process starts by sending (S400) the code that will be received by the target machines to continue their respective processes. Previous to the capture run in the local machine, this sends the dataset in S420, which the program is run with, to every target machine. The dataset may be sent asynchronously, prior to the execution of the system, and therefore, each target machine may already have the dataset locally, and the local machine would then only the reference the dataset needed.

Compilation takes place in S410 to produce instrumented code 20a and extracted code 20b.

Then, the capture run process S110 is exactly the same as described for the target machine (with corresponding steps S430, S440, S450 and S460 as described for S330 to S360), but with a difference: the local machine saves its own working sets 30, 40, while it receives the working sets 30, 40 from the rest of the target machines in S480 and saves them in storage 60. Since the program executed in all machines is essentially the same, these working sets are expected to be the same (provided that the dataset is the same), and therefore, the local machine only keeps a copy of these, together with a reference to each target machine. Given the same starting working set, it is expected that the ending working set is the same, unless the execution flow and the results of instructions depend on the target. In the same manner, given a particular invocation, the starting working set may be different, if the instructions before the extracted code have returned a different value (this is typically not expected, but may happen, and therefore embodiments accommodate this possibility).

In the case that one of the target machines generates a different set of working sets, these will be kept independently, but linked to the expected working sets given the entry dataset. This information may then be presented to the user who may easily identify that the program is not behaving as expected in a certain machine and/or architecture, and hence, enabling him to run the necessary tests to find the origin of the unexpected behaviour.

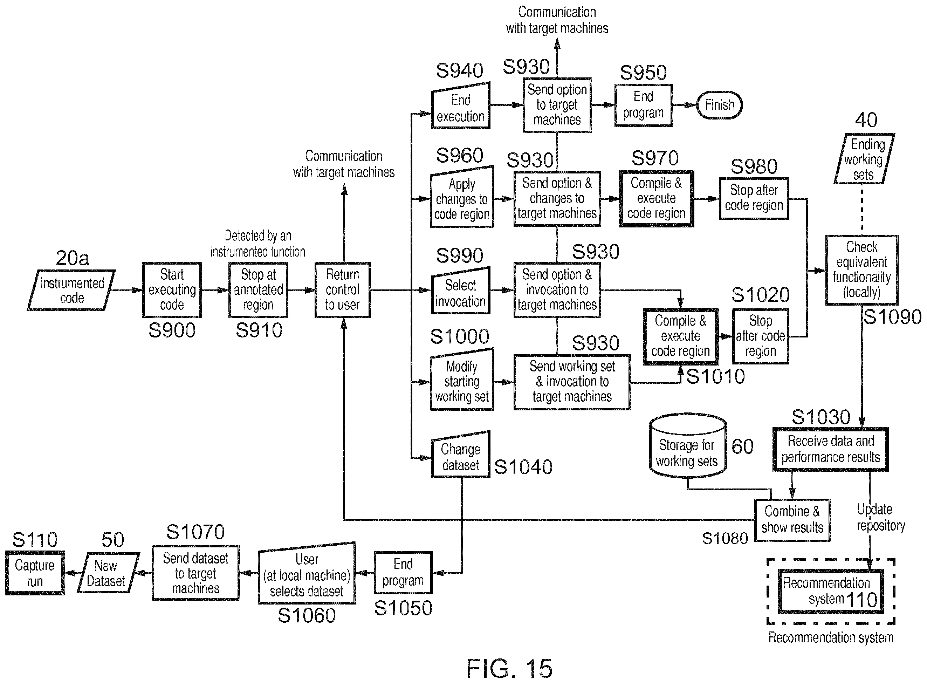

The working sets are then used for the user-controlled run S490 at the local machine, described in Figure 15. After this run, the local machine receives S500 the performance results, as well as the corresponding working sets for each target machine. These results serve as input for an optional method, which updates the repository 70 in S510, building temporal records of pieces of code, and performance of their different versions and implementations. Steps S510 to S530 are as previously described for Figure 5. Step S540 combines and shows the results at the local machine.

Figure 11 depicts the process of code annotation (Figure 11(a)), extraction ((b)), and corresponding instrumentation (Figure 11(c)) from the point of the view of the source code. A modified version of the compiler directive (#pragma extract) is proposed. By using this directive, the user annotates a certain piece of code to trigger its extraction from the parent program. This approach is similar to the one followed by the ROSE compiler infrastructure [D. D. Quinlan, M. Schordan, R. Vuduc, Q. Yi, T. Panas, C. Liao and J. J. Willcock, "ROSE compiler project", [Online]. Available: http:www.rosecompiler.org/]. However, the ROSE compiler does not extract the code region as an independent file that may linked externally, but at the end of the input file. This limits how the extracted code may be used, and the functionality of the tool that makes use of this code.

The code enclosed by the proposed compiler directive is extracted and saved into a new source code file, while the original code is instrumented to implement the functionality required. Figure 11(c) describes how this instrumentation is made from the point of the source code. Here, the plugin to the compiler, which is responsible for the instrumentation, may add more code, in order to adopt the new functionality proposed in embodiments. This new code includes saving the starting and ending working sets into separated structures, which will be sent to the server (the local machine) by new function calls. Moreover, the instrumentation of the code may allow reception of user options remotely, from the local machine, as well as modifications to the starting working set before re-executing the extracted code.

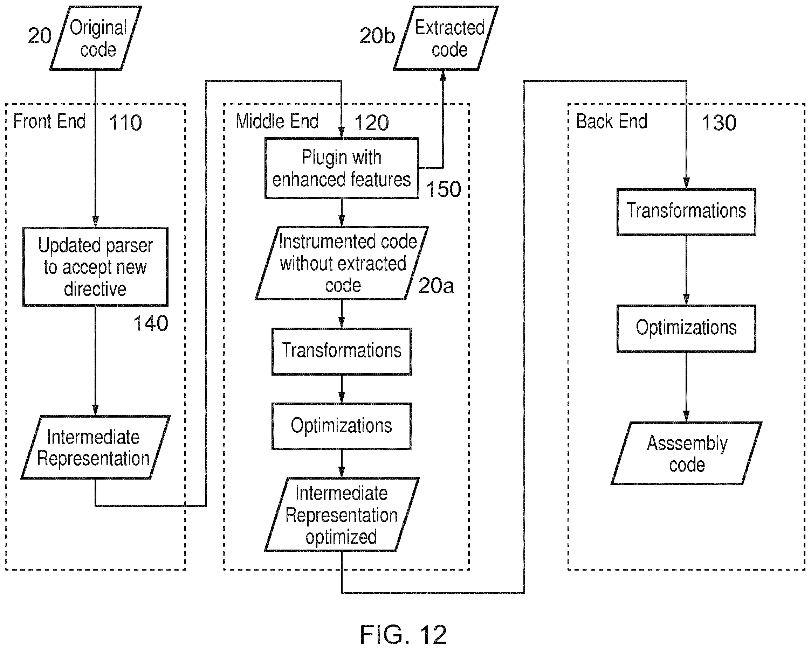

The extraction and instrumentation of the code takes place at compile time. In order to achieve this, the standard compilation process, followed by compilers such as LLVM or GCC, is augmented, as shown in Figure 12. First of all, the parser 140 of front end 110, responsible for the syntactic analysis of the code, has to be updated to recognise the proposed compiler directive. Once this is done, the compiler is able to generate a first intermediate representation of the original code 20. This representation feeds into the second layer of the compiler architecture, middle end 120, in which transformations and optimizations are applied to the instrumented code 20a (without the extracted code). Since the goal is to extract the code without any modification, a plugin 150 (software module inserted into the compiler to alter its standard behaviour) is inserted before any transformation is performed. The extracted code 20b is converted back to C, while the rest of the code is appropriately instrumented before the compilation process may continue. The back end 130 provides further transformations and optimizations, finally producing assembly code.

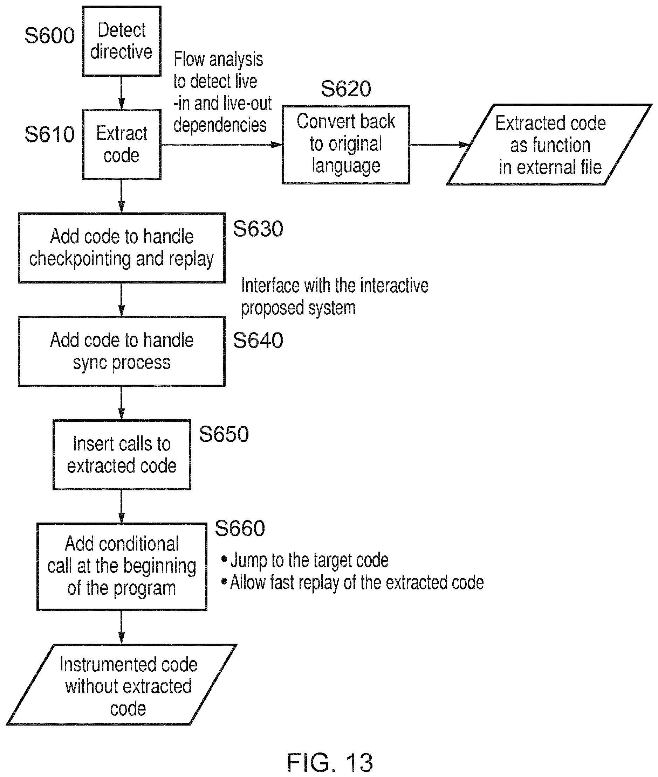

Figure 13 describes the process followed by the plugin inserted into the compiler. When the new compiler directive is detected in S600, the code enclosed by the directive is extracted S610. In order to extract this code it is necessary to apply a flow analysis to detect live-in and live-out dependencies, that is, which values are required by the extracted code to run properly, and which values are generated as a result of the code's operation. As a result of this analysis the parameters for the artificial function created to isolate the code are precisely set. Finally, as the code is held by the compiler using an intermediate representation, the code is transformed back into its original language S620 and saved into an independent source file.

Once the code has been extracted, the rest of the application's code is instrumented to handle the saving process of the starting and ending working sets previously mentioned, guarantee the correct replay of the extracted code, as well as implement the rest of the functionalities of embodiments, for example as described in Figure 14 and Figure 15. This instrumentation takes place in the following steps. Step S640 adds code to handle synchronisation between local and target machines... This refers to the "send_to_server", and "send_data_to_server" functions. But it also refers to explicitly waiting for the user's instructions, such as changing the starting working set, for example. Step S650 inserts calls to the extracted code. Steps S660 adds a conditional call at the beginning of the program, to allow a 'jump' to the extracted code and hence fast replay.

Figure 14 and Figure 15 describe in detail the user-controlled run included in Figure 9 and Figure 10, respectively. Figure 14 describes the mechanism proposed to allow the user to control the execution of the extracted code at the target machine, while Figure 15 describes the same mechanism but from the perspective of the local machine. The processes are interlinked and are described together below.

The instrumented programs 20a resulting from the compilation process start their execution in all target machines and local machine (S700, S900), stopping at the annotated code region (S710, S910), and returning control to the user (S720, S920), which operates the system from the local machine. This user may visualise both the extracted code region, which is common to the extracted regions at the target machines, and the working set corresponding to the first invocation of said code.

While the target machines wait for an order to proceed, the user at the local machine may perform one of the following actions. All these actions are sent to the target machines (S930), which proceed accordingly, applying the corresponding action. In those actions in which the code is compiled and executed again, the user may also send target-specific options to each machine, such as a different number of OpenMP threads to execute a loop, or different scheduling policies.
- **End the execution of the program** (S740, S940): The system finishes its execution and ends the program (S750, S950). This action is send to all target machines.
- **Modify the extracted code region** (S760, S960): The user may modify the source code of the extracted region in order to tune and optimize it. These modifications may be made via a graphical interface, or manually accessing the file containing the extracted code. Then, the changes to the extracted code are sent to the target machines, which begin the compilation (S770, S970) in order to create executable codes for their own hardware architecture. Once the software is compiled, this is dynamically linked into the program, and executed at all target machines and local machine, stopping (S780, S980) after the code region.
   Once each code has been executed at every machine, the process differs at the local and target machines. At the target machine, the ending working set 40, namely the values of the variables and data structures written within the extracted code, is sent to the local machine S830, together with any performance metrics (for example memory consumption) and target-specific environment options, such as the number of OpenMP threads used to run the code. At the local machine, the corresponding ending working set is compared locally in S1090 with the previously captured ending working set in order to check if the modified code is functionally equivalent to the original extracted code. Moreover, it is checked whether the rest of ending working sets (received in S1030 and also sent to previously described recommendation system 110) are the same as the one at the local machine. If not, the different working set is saved with a reference to the target machine that presents the unexpected behaviour.
   For the recommendation system, in parallel, both the starting working set and ending working set (for each target machine), the performance and metric data, and any target-specific environment values are saved in a repository. This repository keeps, for each code region, the starting working set, and target machine, a temporal record of the changes made, the resulting performance at every target machine, as well as the corresponding ending working sets, if different.
   Advantageously, the local machine can instruct the target machines to carry out execution of modified extracted code using all the possible different compiler options for that target machine. For example, the local machine may send all the available compiler options for that target machine to the target machine along with the code modification.
   Compilation using each option produces a plurality of executables, which are all executed, and the results are sent to the local machine and stored in the repository. This self-populates the repository.
   Afterwards, the performance metrics recorded during the execution of the extracted codes in the different target machines, as well as the local machine, are presented by the system in a visual format, S1080. This information also includes the values corresponding to the ending working set, and if there are differences, other ending working sets corresponding to particular target machines. Finally, control is returned once more to the user to start the process again.
- **Select a different invocation of the extracted code region** (S790, S970): A code region is invoked at different times during the execution of a program. The user selects which invocation they would like to run again by indicating the number that corresponds to a particular invocation, which is recorded during the 'capture run' and send the option to the target machines S930. Then, the code is compiled and run at all target and local machines (S810, S1010), which dynamically links this code into the running parent program. This code is therefore executed with the correct starting working set corresponding to the invocation indicated. Execution stops after the code region (S820, S1020).
   Afterwards, the process is similar to that described in the previous point. Ending working sets, performance metrics, and environment values are sent to the local machine, which updates the repository and the locally stored working sets accordingly. Performance metrics recorded during the execution of the extracted codes in the different target machines, as well as the local machine, are presented by the system in a visual format. This information also includes the values corresponding to the ending working set, and if there are differences, other ending working sets corresponding to particular target machines. Finally, control is returned once more to the user to start the process again.
- **Modify the starting working set being used** (S800, S1000): Each invocation of the extracted code region has associated a starting working set which the code needs to be replayed. The values of this working set are also modified with the aim of testing different cases for the extracted code. These modifications are propagated to the target machines (S730, S930), to then follow the same process as indicated in the previous step.
- **Change the dataset of the program** (S1040): The entry dataset modifies the whole behaviour of the program. As a result, the current execution of the program, which has been initialised using a different dataset, is ended in S850. Moreover, this option is sent to the target machines, which accordingly finish their respective programs S1050. Then, the user sets (S860, S1060) a different dataset for the program to run, while the system operation goes back to the 'capture run' state. This new dataset 50 is sent to every target machine in S870, S1070, and the process flow returns to the 'capture run' state S110.

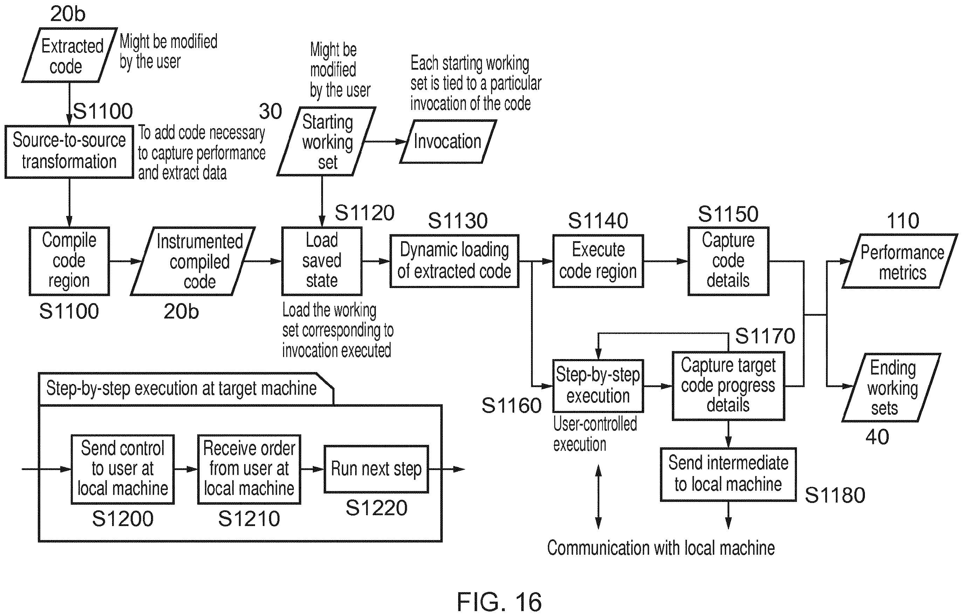

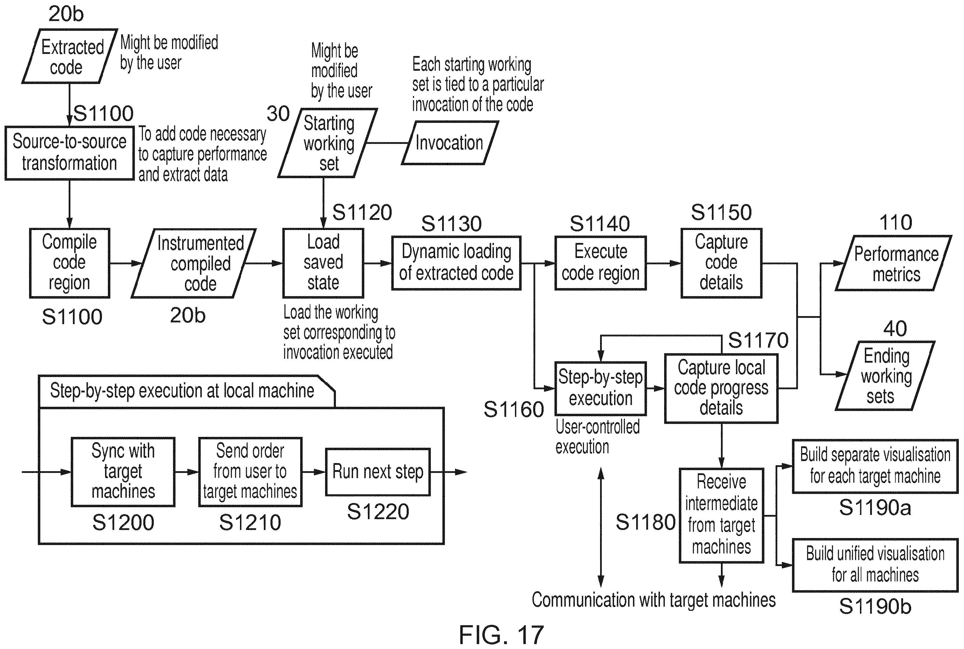

This user-controlled run of the extracted code, which synchronizes local and target machines, and handles the working sets and the performance metrics for each machine, is a unique feature of embodiments. The detailed compilation and execution operation of the extracted code at a target machine is described in Figure 16, while the process corresponding to the local machine is depicted in Figure 17. Both processes are very similar, and are described below.

Prior to the compilation, a source-to-source transformation is applied in S1100 to the extracted code, which might be also modified by the user, in order to instrument the code to capture all the performance metrics required, and allow for a step-by-step execution thereof. As far as the inventor knows, there is no known solution that allows for step-by-step execution of code that is executing at multiple target machines. The coordination, and synchronisation between the local machine and the different target machines is novel.

Once the code is compiled in S1110, the starting working set corresponding to the selected invocation is loaded in S1120, and hence, variables and data structures required by the extracted code are set to their correct values. Note that these values might be also changed by the user at the local machine, which is a unique feature of embodiments. As shown in Figure 15, the new values for the starting set are sent to every target machine, so all machines involved in this method begin the execution of their corresponding extracted code with exactly the same conditions.

After the starting working set is loaded, the extracted code is dynamically loaded into the parent program to be then called via a function. This call starts the execution of the code region, which may be uninterrupted, or following a step-by-step basis. In the first case, the whole extracted code is executed at once, while several performance metrics/code details are collected in S1150. Not only are the different performance metrics captured, but also the value of the working sets, which are not metrics per se. In the second case, the code is executed step-by-step in S1160, controlled by the user at the local machine, capturing target code process details in S1170 for sending to the user in S1180 and allowing this user to visualize the state of the variables and the value of certain metrics along the execution of the code.

When the extracted code ends its execution, these metrics 110, together with the ending working set 40, are gathered to be sent to the local machine in and later represented, as Figure 15 shows. These metrics may be in intermediate form and visualisation is built at the local machines, either separately for each target (S1190a) or together for all machines (S1190b).

Due to the fact that the embodiments are able to handle the execution of regions of code at the same time over different machines, there are some measures required to make this possible. These measures affect the step-by-step execution. At each target machine, after each instruction executed, control is sent to the user at the local machine, who is controlling the execution of the programs at all target machines and the local machine, to synchronise in step S1200. When the user proceeds with the execution of the following instruction in the code, this order is sent to all target machines, in S1210 for the next step to run in S1220. This process continues until reaching the last instruction of the extracted piece of code.

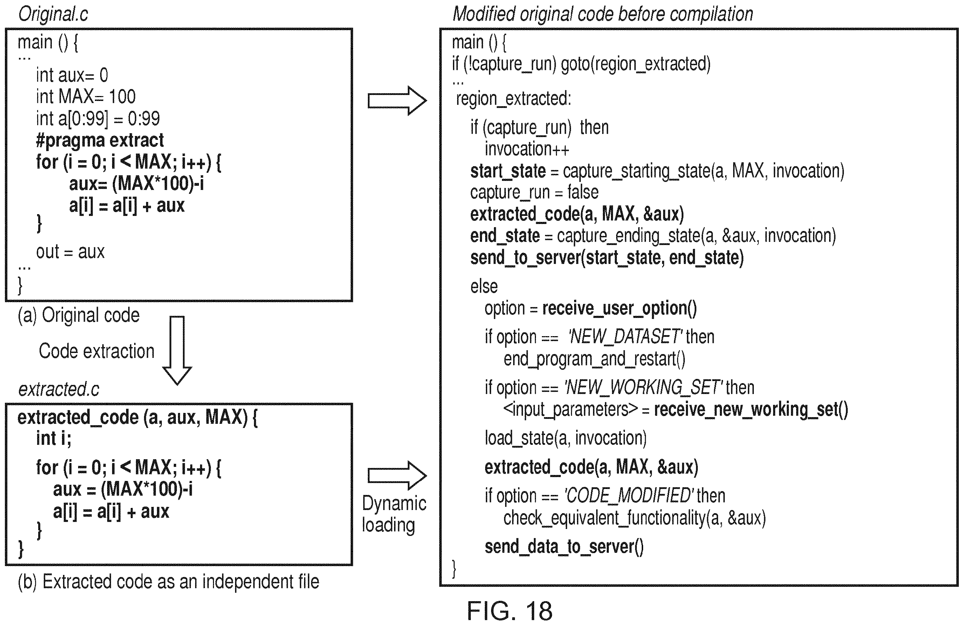

A potential user of this system has written or is using a code, part of which is included in Figure 18(a). This user has no experience in OpenMP, but wants to apply it into the loop shown in the Figure, while testing the code not only on his local machine, but also on several other machines and/or architectures as well. The whole program is significantly large, taking a few minutes to be executed, and hence, the user is not willing to spend this time after each re-compilation and re-execution of the whole program, at every target machine. Moreover, applying changes to the code, and then synchronising these changes across the copies in all machines, is a time-consuming task. Therefore, the user decides to makes use of an embodiment.

Firstly, the user annotates the loop using the compiler directive (a variation of #pragma extract). The user then compiles the program, which results in the extraction of the annotated code region, as shown in Figure 18(b), and the instrumentation of the original code, as shown in Figure 18(c). Figure 18 is an example of (a) code region annotated to be extracted, (b) the extracted code region as a function in an independent file that may be dynamically loaded and (c) the instrumented code in which the code region has been replaced with a function call to the extracted code. Each target machine and the local machine have a copy of both the extracted code and the instrumented code.

As described in Figure 11, variables that are need to run the extracted code are marked as input parameters (a, MAX), while variables that are written inside the loop that might be used outside are marked as output parameters (a, aux). These parameters are then used to set the arguments of the function that encloses the extracted code, and create the corresponding calls to the function. Moreover, additional code is added to handle the capture of the starting and ending working sets for that piece of code, and to be able to send and receive them, together with user options, through the network.

Once the instrumented code has been generated, a 'capture run' is executed, in order to capture the starting and ending working sets of each invocation of the extracted code.

The following step is the user-controlled execution of the extracted code. Before replaying the execution of said code, the system displays the code as well as starting working set. The system also allows the user to choose between several options, as well changing certain environment variables for all machines, or only for a subset of them.

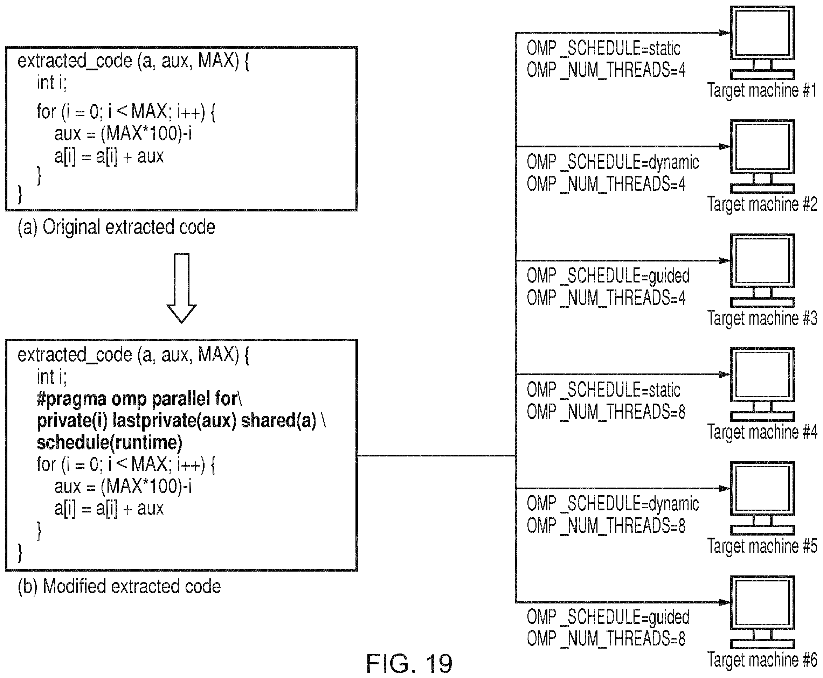

In this example, the user chooses to modify the extracted code, as shown in Figure 19. The user parallelises the extracted code with OpenMP, and would like to test different scheduling policies on different machines, and therefore, with different hardware architectures, at the same time collecting information about execution time of the loop, for example.

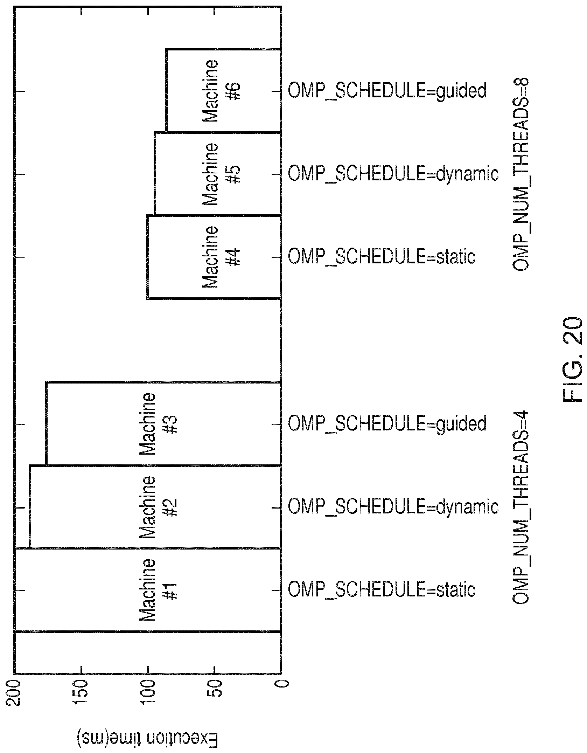

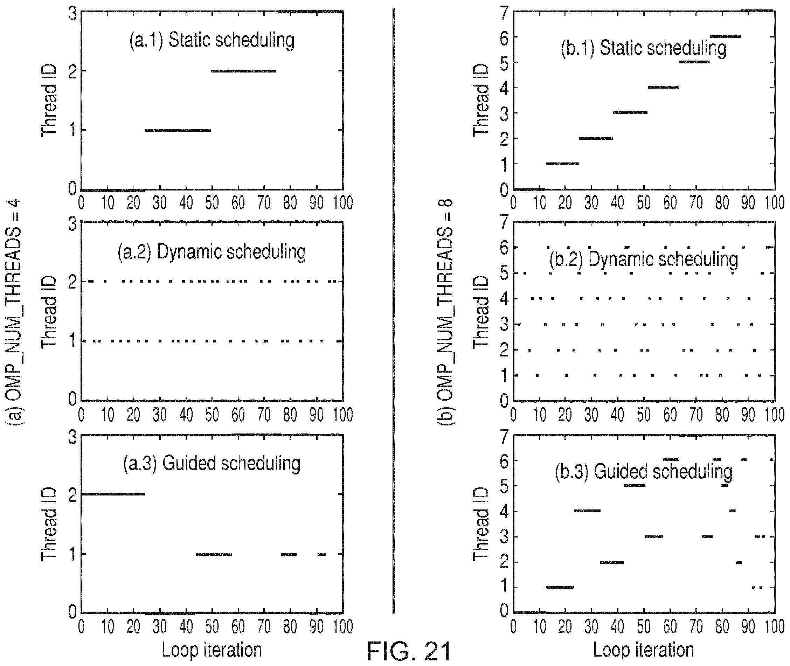

Once the code has been executed at every target machine, the system collects the ending working sets and several metrics, such as the execution time, as depicted in Figure 20, and the different distribution of iterations of the loop at each target machine, as shown in Figure 21.

Since each machine is different, and the target-specific settings were also different, the results that the user receives are different. Taking into account these differences, the user may reach certain conclusions, and learn more about OpenMP and/or the hardware architectures in which the code has been executed. Embodiments simplify the user's workflow, and speeds up the whole process of testing, evaluation, and optimisation.

Embodiments may be applied to any field is which there is use of software code, and there is a need to test, evaluate, tune and/or optimise it, not only in the local machine, but across a large set of machines. Embodiments may be used not only with HPC applications, but also with programs and applications that belong to any other field, since the mechanism described may be applied to any type of software code.

Another use is in a cloud environment, offering functionalities as a service. This way, users could access the system described by the embodiments remotely, without having to configure anything locally; Users would only have to upload their code to the cloud environment, where the access to the different machines and hardware architectures is facilitated by the cloud.

### Hardware Implementation

Figure 22 is a block diagram of a computing device, such as a data storage server which embodies the present invention, and which may be used to implement a method of the local machine or a target machine. The computing device comprises a processor 993, and memory, 994. Optionally, the computing device also includes a network interface 997 for communication with other computing devices, for example with other computing devices of invention embodiments.

For example, an embodiment may be composed of a network of such computing devices serving as the local machine and the target machines. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device, for example, the code and performance metrics and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The computing device shown in Figure 22 may be a detailed embodiment of local machine 10 or target machine 100 show in Figure 3a to 3c. Hence it may carry out the method steps for either of those machines shown in Figures 2a to 2c and in Figures 4-6, 8-10 and 13-17.

Methods embodying the present invention may be carried out on a computing device such as that illustrated in Figure 22. Such a computing device need not have every component illustrated in Figure 22, and may be composed of a subset of those components. A method embodying the present invention may be carried out by a single computing device in communication with one or more data storage servers via a network. The computing device may be a data storage itself storing the code in all the different versions described herein and the results of the execution.

A method embodying the present invention may be carried out by a plurality of computing devices operating in cooperation with one another. One or more of the plurality of computing devices may be a data storage server storing at least a portion of the code and results.

### Benefits

The implementation of embodiments could result in the following benefits:
- Making the process of applying modifications to code regions agile, automating the tasks of (1) sending and applying the changes remotely, (2) compiling the software code for every specific target machine, (3) running the resulting compiled software code, and (4) gathering the results from each individual execution.
- Efficiency, reducing developing and testing time, thanks to an interactive control of the re-execution of the extracted piece of code, not only in a local machine, but also in several target machines, allowing the change of the code itself, its starting working set, and the particular invocation of the code being executed. The user may also send target-specific options to each machine, such as a different number of OpenMP threads to execute a loop, or different scheduling policies. This increases vastly the number of experiments that a programmer may test over a piece of code, where otherwise the programmer would need to apply each of these changes manually and test them one after the other. Embodiments allow the user to test many changes concurrently, over different machines.
- Cutting the time spent in the developing of the different instances and the comparison of their outcomes, by using allowing a quick development and execution process, avoiding the need to recompile and re-execute the whole parent program. Since the re-execution of the code takes place at every target machine concurrently, the actual time needed to test the code over these machines is significantly reduced.
- Helping the user to choose which architecture is more suitable for certain code.
- Helping the user to choose which optimisation works better for certain code in a certain machine and/or hardware architecture.
- Helping the user not only in the development, but also to get a better understanding of the code and the modifications applied, and how these modifications may have a different impact on different machines and/or architectures. Visualisations of performance metrics, as well the values of the starting and working sets for each machine, facilitate this understanding.
- Because the extracted code is dynamically loaded in the parent application at each target machine, it is possible for the user to apply changes into the code locally, even if the application is already running at each target machine.
- Extraction of performance metrics for different configurations of the same hotspot for different machines at the same time. The user may mark to extract a hotpot in the application, and re-execute it at different target machines to capture these metrics without requiring re-compiling and re-executing the rest of the parent program at every target machine.

### Glossary

**Architecture:** the underlying structure of the machine, which may encompass both hardware architecture (all the parts of the machine that are not software, including processor, memory, connecting buses, and peripherals) and software architecture (the lowest levels of the software stack, including the operating system (OS)
**Local machine:** the machine where a user is located. It may be linked to target machines over a network.
**Target machine:** the machine to which the programmer sends the software code for its compilation, which result in an executable code that may only be run in that machine, or any other compatible machine.
**Code isolation:** the process of separating and isolating a certain region (piece) of source code from the rest of the application's source code. This process makes the extracted region of code independent from the original application.
**Code outlining:** the process of extracting a certain region of source code, wrapping it as a function, and replacing it by a call to the created function.
**Code inlining:** the process by which a function call site is replaced with the body of the callee. This process is also called inline expansion.
**Dataset:** the collection of data, or related sets of information, that is fed into a program (for processing by the program). Depending on the dataset, a certain program will behave in one way or another.
**Working set:** the value or state of the variables and data structures used by a program or piece of code to be run.
**Dynamic loading:** a mechanism by which a computer program can, at run time, load a library (or other binary) into memory, retrieve the addresses of functions and variables contained in the library, execute those functions or access those variables, and unload the library from memory. Unlike other related mechanisms, such as static linking and dynamic linking, dynamic loading allows a computer program to start up in the absence of these libraries, to discover available libraries, and to potentially gain additional functionality.
**Checkpointing:** a technique to add fault tolerance into computing systems. It basically consists of saving a snapshot of the application's state, so that it may restart from that point in case of failure. As the application's state is saved, checkpointing may be also used to restart or replay the execution of the application from the moment when its state was saved.
**Code invocation:** a certain piece of code may be run several times during the execution of an application. Each time a piece of code is run is called a 'code invocation'. This means that the execution flow of the application may pass through this code, and therefore, execute the instructions in the code several times. **Source-to-source transformation:** a process that parses a certain piece of source code to generate another piece of source of code.
**HPC:** High Performance Computing
**Profiling:** a form of program analysis that measures a variety of features that characterize the run-time behaviour of a software application given a particular input. Examples of these features are the elapsed time from the beginning to the end of the program execution, and the percentage of communication time in a distributed parallel program over its total elapse time.
**Profiler:** a software program that performs the profiling process.
**Instrumentation:** a process by which a program is augmented with special code instructions, for example to monitor its runtime behaviour and/or measure its runtime performance.

## Claims

1. A computer-implemented method for comparing the results on a plurality of target machines of modification of a region of original code (20), the method comprising:
at a local machine (10), allowing a user to annotate a region of original code (20) in a program to be extracted with a compiler (120) directive;
distributing the annotated program from the local machine (10) to the target machines;
at each target machine (100) and at the local machine (10), compiling the annotated program code including the original code (20) and the compiler (120) directive, and during compilation the compiler (120) directive causing the annotated region of the original code (20) to be extracted to generate extracted code (20b), which is then linked to a function call located at a position in the original code (20) from which the extracted region was extracted, instrumenting the remaining original code (20) of the program to save starting and ending working sets required to execute the extracted code region in the form of the value or state of the variables and data structures used, and generating executable code comprising the extracted code (20b) and instrumented code (20a);
allowing modification by a user of the extracted code (20b) at the local machine (10) and sending the modification to the target machines, the modification triggering re-compilation of the modified extracted code at each target machine (100);
at the local machine (10), allowing selection by a user of one or more options that are sent to the target machines in the form of any of a particular invocation of the extracted code, a modification of the starting working set, and a change of the initial dataset of the program;
at each target machine (100), generating a new executable version of the extracted code for dynamic loading into the instrumented code (20a); and
at each target machine (100), executing the instrumented code (20a) and dynamically loading and executing the new executable version of the extracted code and sending the results of each individual execution to the local machine (10), where the results are received and displayed for comparison.

2. A method according to claim 1, further comprising each target machine (100) converting the extracted code (20b) back into its pre-compilation form after extraction, and saving the extracted code (20b) for remote modification and for re-compilation before execution.

3. A method according to claim 1 or 2, further comprising, after execution of the extracted code (20b), saving starting and ending working sets in the form of the value or state of the variables and data structures used.

4. A method according to claim 3, further comprising sending the starting and ending working sets from each target machine (100) to the local machine (10) and storing a reference to each target machine (100) with the same starting and ending working sets at the local machine (10) and also storing at the local machine (10) any different starting and ending working sets with a reference to the particular target machine (100) which produced the different starting and ending working sets.

5. A method according to any of the preceding claims, further comprising, before any execution, sending a dataset for execution from the local machine (10) to the target machines or sending a reference to a dataset already available at the target machines, wherein a dataset is a collection of data, or related sets of information, that is fed into a program for processing by the program.

6. A method according to any of the preceding claims, further comprising, at each target machine (100), instrumenting the extracted code (20b) to allow one or more of a concurrent user-controlled execution and capture of one or more performance metrics.

7. A method according to claim 6, wherein the user controlled execution provides for one or more of the following options: applying changes to the code region; selecting an invocation of the extracted code (20b); modifying a starting working set; changing a dataset for execution; and selecting different options for different target machines.

8. A method according to claim 6 or 7, wherein the user controlled execution returns control to the user of execution at each target machine (100) after each instruction executed.

9. A method according to any of the preceding claims, further comprising displaying the extracted code (20b) region at the local machine (10).

10. A method according to any of the preceding claims, further comprising displaying results at the local machine (10) as ending working sets and optionally one or more of: starting working sets and one or more performance metrics for each target machine (100).

11. A computer-implemented method at a local machine (10) for comparing the results on a plurality of target machines of modification of a region of original code (20), the method comprising:
allowing a user to annotate a region of original code (20) in a program to be extracted with a compiler (120) directive;
distributing the annotated program to the target machines;
compiling the annotated program code including the original code (20) and the compiler (120) directive, and during compilation the compiler (120) directive causing the annotated region of the original code (20) to be extracted to generate the extracted code (20b), and then linked to a function call located at a position in the original code (20) from which the extracted region was extracted, instrumenting the remaining original code (20) of the program to save starting and ending working sets required to execute the extracted code region in the form of the value or state of the variables and data structures used, and generating executable code comprising the extracted code (20b) and instrumented code (20a);
allowing a user to modify the extracted code and sending the modification to the target machines;
receiving from each target machine the results of each individual execution of the target machine executing the instrumented code (20a) and dynamically loading and executing the new executable version of the extracted code;
allowing user selection of one or more options that are sent to the target machines in the form of any of a particular invocation of the extracted code, a modification of the starting working set, and a change of the initial dataset of the program; and
displaying the results of the target machines to allow determination of the effects of the modification on the results from the different target machines.

12. A computer-implemented method on a target machine to allow comparison of the results on the target machine of modification of a region of original code (20) with the results of other target machines, the method comprising:
receiving an annotated program from a local machine (10), including a region of original code (20) in the program annotated by a user to be extracted with a compiler (120) directive;
compiling the annotated program code including the original code (20) and the compiler (120) directive, and during compilation the compiler (120) directive causing the annotated region of the original code (20) to be extracted to generate the extracted code (20b), which is linked to a function call located at a position in the original code (20) from which the extracted region was extracted, instrumenting the remaining original code (20) of the program to save starting and ending working sets required to execute the extracted code region in the form of the value or state of the variables and data structures used by the extracted code (20b), and generating executable code comprising the extracted code (20b) and instrumented code (20a), wherein;
receiving a modification of the extracted code (20b), re-compiling the modified extracted code and generating a new executable version of the extracted code for dynamic loading into the instrumented code (20a);
executing the instrumented code (20a) and dynamically loading and executing the new executable version of the extracted code and sending the results to the local machine (10) for comparison.

13. A local machine (10) operable to compare the results on a plurality of target machines of modification of a region of original code (20), wherein:
the local machine (10) comprises a user interface, a compiler (120) and a local network interface (16, 997) controlled by a local processor (14, 140, 993), wherein:
the user interface is to allow annotation by the user of a region of original code (20) in a program to be extracted with a compiler (120) directive;
the compiler (120) is to compile the annotated program code including the original code (20) and the compiler (120) directive, and during compilation to use the compiler (120) directive to cause the annotated region of the original code (20) to be extracted to generate the extracted code (20b), linked to a function call located at a position in the original code (20) from which the extracted region was extracted, and to instrument the remaining original code (20) of the program to save starting and ending working sets required to execute the extracted code (20b) region in the form of the value or state of the variables and data structures used, and to generate executable code in the form of the extracted code (20b) and instrumented code (20a); and
the local network interface (16, 997) is to distribute the annotated program from the local machine (10) to the target machines;
the user interface is to allow user modification of the extracted code, to send the user modification to the target machines; and to receive the results of execution at each target machine;
the user interface is to allow selection of one or more options that are sent to the target machines in the form of any of a particular invocation of the extracted code, a modification of the starting working set, and a change of the initial dataset of the program; and
the user interface is to display the results for comparison by the user.

14. A target machine to allow comparison of the results on the target machine of modification of a region of original code (20) with the results of other target machines, wherein:
the target machine comprises a compiler (120) and a target network interface (16, 997) controlled by a target processor (14, 140, 993), wherein:
the target network interface (16, 997) is to receive an annotated program, including annotation by the user of a region of original code (20) in the program to be extracted with a compiler (120) directive;
the compiler (120) is to compile the annotated program code including the original code (20) and the compiler (120) directive, and during compilation to use the compiler (120) directive to cause the annotated region of the original code (20) to be extracted to generate the extracted code (20b), which is linked to a function call located at a position in the original code (20) from which the extracted region was extracted, and to instrument the remaining original code (20) of the program to save starting and ending working sets required to execute the extracted code (20b) region in the form of the value or state of the variables and data structures used, to generate executable code comprising the extracted code (20b) and instrumented code (20a);
the target network interface (16, 997) is to receive a modification of the extracted code (20b) from the local machine (10);
the compiler (120) is to re-compile the modified extracted code when triggered by receipt of the modified extracted code and to generate a new executable version of the extracted code for dynamic loading into the instrumented code (20a);
the target processor (14, 140, 993) is to execute the instrumented code (20a) and to dynamically load and execute the new executable version of the extracted code; and
the target network interface (16, 997) is to send the results to the local machine (10) for comparison.

15. A computer system comprising a local machine (10) according to claim 13 and a plurality of target machines according to claim 14.

## Patentansprüche

1. Computerimplementiertes Verfahren zum Vergleichen der Resultate einer Änderung eines Bereichs von ursprünglichem Code (20) auf einer Vielzahl von Zielmaschinen, das Verfahren umfassend:
auf einer lokalen Maschine (10), die es einem Benutzer ermöglicht, einen Bereich von ursprünglichem Code (20) in einem Programm, das mit einer Anweisung eines Compilers (120) extrahiert werden soll, zu notieren;
Verteilen des notierten Programms von der lokalen Maschine (10) auf die Zielmaschine;
auf jeder Zielmaschine (100) und auf der lokalen Maschine (10), Kompilieren des notierten Programmcodes einschließlich des ursprünglichen Codes (20) und der Anweisung des Compilers (120), und wobei die Anweisung des Compilers (120) während der Kompilierung bewirkt, dass der notierte Bereich des ursprünglichem Codes (20) extrahiert wird, um extrahierten Code (20b) zu erzeugen, der dann mit einem Funktionsaufruf verlinkt wird, der sich an einer Position in dem ursprünglichen Code (20) befindet, aus dem der extrahierte Bereich extrahiert wurde, Instrumentieren des verbleibenden ursprünglichen Codes (20) des Programms, um Start- und End-Arbeitssätze zu speichern, die erforderlich sind, um den extrahierten Codebereich in Form des Werts oder Zustands der verwendeten Variablen und Datenstrukturen auszuführen, und Erzeugen von ausführbarem Code, umfassend den extrahierten Code (20b) und instrumentierten Code (20a);
Ermöglichen einer Änderung des extrahierten Codes (20b) durch einen Benutzer auf dem lokalen Maschine (10) und Senden der Änderung an die Zielmaschine, wobei die Änderung eine erneute Kompilierung des modifizierten extrahierten Codes auf jeder Zielmaschine (100) auslöst;
auf der lokalen Maschine (10), Ermöglichen einer Auswahl durch einen Benutzer von einer oder mehreren Optionen, die in Form eines beliebigen von einem jeweiligen Aufruf des extrahierten Codes, einer Änderung des Start-Arbeitssatzes und einer Änderung des anfänglichen Datensatzes des Programms an die Zielmaschinen gesendet werden;
auf jeder Zielmaschine (100), Erzeugen einer neuen ausführbaren Version des extrahierten Codes zum dynamischen Laden in den instrumentierten Code (20a); und
auf jedem Zielmaschine (100), Ausführen des instrumentierten Codes (20a) und dynamisches Laden und Ausführen der neuen ausführbaren Version des extrahierten Codes und Senden der Resultate von jeder einzelnen Ausführung an die lokale Maschine (10), wo die Resultate empfangen und zum Vergleich angezeigt werden.

2. Verfahren gemäß Anspruch 1, ferner umfassend, dass jede Zielmaschine (100) den extrahierten Code (20b) nach Extraktion wieder in seine Form vor Kompilierung umwandelt und den extrahierten Code (20b) zur entfernten Änderung und zur erneuten Kompilierung vor einer Ausführung speichert.

3. Verfahren gemäß Anspruch 1 oder 2, wobei nach Ausführung des extrahierten Codes (20b) die Start- und End-Arbeitssätze in Form der Werte oder des Zustands der verwendeten Variablen und Datenstrukturen gespeichert werden.

4. Verfahren gemäß Anspruch 3, ferner umfassend ein Senden der Start- und End-Arbeitssätze von jeder Zielmaschine (100) an die lokale Maschine (10) und ein Speichern eines Verweises auf jede Zielmaschine (100) mit denselben Start- und End-Arbeitssätzen in der lokalen Maschine (10) und auch ein Speichern aller unterschiedlichen Start- und End-Arbeitssätze in der lokalen Maschine (10) mit einem Verweis auf die jeweilige Zielmaschine (100), die die unterschiedlichen Start- und End-Arbeitssätze erzeugt hat.

5. Verfahren gemäß einem der vorherigen Ansprüche, ferner umfassend vor einer beliebigen Ausführung ein Senden eines Datensatzes zur Ausführung von der lokalen Maschine (10) an die Zielmaschinen oder ein Senden eines Verweises auf einen bereits auf den Zielmaschinen verfügbaren Datensatz, wobei ein Datensatz eine Sammlung von Daten oder in Beziehung stehenden Informationssätzen ist, die zum Verarbeiten durch das Programm in ein Programm eingespeist werden.

6. Verfahren gemäß einem der vorherigen Ansprüche, ferner umfassend, auf jeder Zielmaschine (100), ein Instrumentieren des extrahierten Codes (20b), um eines oder mehrere von einer gleichzeitigen benutzergesteuerten Ausführung und Erfassung einer oder mehrerer Leistungskennzahlen zu ermöglichen.

7. Verfahren gemäß Anspruch 6, wobei die benutzergesteuerte Ausführung eine oder mehrere der folgenden Optionen bereitstellt: Anwenden von Änderungen auf den Codebereich; Auswählen eines Aufrufs des extrahierten Codes (20b); Ändern eines Start-Arbeitssatzes, Ändern eines Datensatzes zur Ausführung und Auswählen verschiedener Optionen für verschiedene Zielmaschinen.

8. Verfahren gemäß Anspruch 6 oder 7, wobei die benutzergesteuerte Ausführung die Kontrolle über die Ausführung auf jeder Zielmaschine (100) nach jeder ausgeführten Anweisung an den Benutzer zurückgibt.

9. Verfahren gemäß einem der vorherigen Ansprüche, ferner umfassend ein Anzeigen des extrahierten Codebereichs (20b) auf der lokalen Maschine (10).

10. Verfahren gemäß einem der vorherigen Ansprüche, ferner umfassend ein Anzeigen von Resultaten auf der lokalen Maschine (10) als End-Arbeitssätze und optional eines oder mehrere von Folgenden: Start-Arbeitssätze und eine oder mehrere Leistungskennzahlen für jede Zielmaschine (100).

11. Computerimplementiertes Verfahren auf einer lokalen Maschine (10) zum Vergleichen der Resultate einer Änderung eines Bereichs von ursprünglichem Code (20) auf einer Vielzahl von Zielmaschinen, das Verfahren umfassend:
einem Benutzer ermöglichen, einen Bereich von ursprünglichem Code (20) in einem Programm, das mit einer Anweisung eines Compilers (120) extrahiert werden soll, zu notieren;
Verteilen des notierten Programms auf die Zielmaschine;
Kompilieren des notierten Programmcodes einschließlich des ursprünglichen Codes (20) und der Anweisung des Compilers (120), und wobei die Anweisung des Compilers (120) während der Kompilierung bewirkt, dass der notierte Bereich des ursprünglichem Codes (20) extrahiert wird, um den extrahierten Code (20b) zu erzeugen, und dann mit einem Funktionsaufruf verlinkt wird, der sich an einer Position in dem ursprünglichen Code (20) befindet, aus dem der extrahierte Bereich extrahiert wurde, Instrumentieren des verbleibenden ursprünglichen Codes (20) des Programms, um Start- und End-Arbeitssätze zu speichern, die erforderlich sind, um den extrahierten Codebereich in Form des Werts oder Zustands der verwendeten Variablen und Datenstrukturen auszuführen, und Erzeugen von ausführbarem Code, umfassend den extrahierten Code (20b) und instrumentierten Code (20a);
einem Benutzer ermöglichen, den extrahierten Code zu ändern und die Änderung an die Zielmaschinen zu senden;
Empfangen, von jeder Zielmaschine, der Resultate von jeder einzelnen Ausführung der Zielmaschine, die den instrumentierten Code (20a) ausführt, und dynamisches Laden und Ausführen der neuen ausführbaren Version des extrahierten Codes;
Ermöglichen einer Auswahl durch einen Benutzer von einer oder mehreren Optionen, die in Form eines beliebigen von einem jeweiligen Aufruf des extrahierten Codes, einer Änderung des Start-Arbeitssatzes und einer Änderung des anfänglichen Datensatzes des Programms an die Zielmaschinen gesendet werden; und
Anzeigen der Resultate der Zielmaschinen, um eine Bestimmung der Auswirkungen der Änderung auf die Resultate der verschiedenen Zielmaschinen zu ermöglichen.

12. Computerimplementiertes Verfahren auf einer Zielmaschine, um einen Vergleich der Resultate der Änderung eines Bereichs von ursprünglichem Code (20) auf der Zielmaschine mit den Resultaten anderer Zielmaschinen zu ermöglichen, das Verfahren umfassend:
Empfangen eines notierten Programms von einer lokalen Maschine (10), einschließlich eines Bereichs von ursprünglichem Code (20) in dem Programm, der von einem Benutzer notiert wurde, um mit einer Anweisung eines Compilers (120) extrahiert zu werden;
Kompilieren des notierten Programmcodes einschließlich des ursprünglichen Codes (20) und der Anweisung des Compilers (120), und wobei die Anweisung des Compilers (120) während der Kompilierung bewirkt, dass der notierte Bereich des ursprünglichem Codes (20) extrahiert wird, um den extrahierten Code (20b) zu erzeugen, der dann mit einem Funktionsaufruf verlinkt wird, der sich an einer Position in dem ursprünglichen Code (20) befindet, aus dem der extrahierte Bereich extrahiert wurde, Instrumentieren des verbleibenden ursprünglichen Codes (20) des Programms, um Start- und End-Arbeitssätze zu speichern, die erforderlich sind, um den extrahierten Codebereich in Form des Werts oder Zustands der verwendeten Variablen und Datenstrukturen auszuführen, die von dem extrahierten Code (20b) verwendet werden, und Erzeugen von ausführbarem Code, umfassend den extrahierten Code (20b) und instrumentierten Code (20a);
Empfangen einer Änderung des extrahierten Codes (20b), erneutes Kompilieren des geänderten extrahierten Codes und Erzeugen einer neuen ausführbaren Version des extrahierten Codes zum dynamischen Laden in den instrumentierten Code (20a);
Ausführen des instrumentierten Codes (20a) und dynamisches Laden und Ausführen der neuen ausführbaren Version des extrahierten Codes und Senden der Resultate zum Vergleich an die lokale Maschine (10).

13. Lokale Maschine (10), die betrieben werden kann, um die Resultate einer Änderung eines Bereichs von ursprünglichem Code (20) auf einer Vielzahl von Zielmaschinen zu vergleichen, wobei:
die lokale Maschine (10) eine Benutzeroberfläche, einen Compiler (120) und eine lokale Netzwerkschnittstelle (16, 997), die von einem lokalen Prozessor (14, 140, 993) gesteuert wird, umfasst, wobei:
die Benutzerschnittstelle es dem Benutzer ermöglichen soll, einen Bereich von ursprünglichem Code (20) in einem Programm, das mit einer Anweisung eines Compilers (120) extrahiert werden soll, zu notieren;
der Compiler (120) den kommentierten Programmcode einschließlich des ursprünglichen Codes (20) und der Anweisung des Compilers (120) kompilieren und während der Kompilierung die Anweisung des Compilers (120) verwenden soll, um zu bewirken, dass der notierte Bereich des ursprünglichen Codes (20) extrahiert wird, um den extrahierten Code (20b) zu erzeugen, der mit einem Funktionsaufruf verlinkt ist, der sich an einer Position in dem ursprünglichen Code (20) befindet, aus dem der extrahierte Bereich extrahiert wurde, und den verbleibenden ursprünglichen Code (20) des Programms zu instrumentieren, um Start- und End-Arbeitssätze zu speichern, die erforderlich sind, um den Bereich des extrahierten Codes (20b) in Form des Werts oder Zustands der verwendeten Variablen und Datenstrukturen auszuführen, und um ausführbaren Code in Form des extrahierten Codes (20b) und des instrumentierten Codes (20a) zu erzeugen; und
die lokale Netzwerkschnittstelle (16, 997) das notierte Programm von der lokalen Maschine (10) an die Zielmaschine verteilen soll;
die Benutzerschnittstelle eine Änderung des extrahierten Codes durch den Benutzer ermöglichen soll, die Änderung des Benutzers an die Zielmaschinen zu senden und die Resultate der Ausführung auf jeder Zielmaschine zu empfangen;
die Benutzeroberfläche eine Auswahl durch einen Benutzer von einer oder mehreren Optionen ermöglichen soll, die in Form eines beliebigen von einem jeweiligen Aufruf des extrahierten Codes, einer Änderung des Start-Arbeitssatzes und einer Änderung des anfänglichen Datensatzes des Programms an die Zielmaschinen gesendet werden; und
die Benutzeroberfläche die Resultate zum Vergleich durch den Benutzer anzeigen soll.

14. Zielmaschine, die einen Vergleich der Resultate einer Änderung eines Bereichs von ursprünglichem Code (20) auf der Zielmaschine mit den Resultaten anderer Zielmaschinen ermöglichen soll, wobei:
die Zielmaschine einen Compiler (120) und eine Zielnetzwerkschnittstelle (16, 997) umfasst, die von einem Zielprozessor (14, 140, 993) gesteuert wird, wobei:
die Zielnetzschnittstelle (16, 997) ein notiertes Programm empfangen soll, einschließlich einer Notierung eines Bereichs von ursprünglichem Code (20) in dem mit einer Anweisung des Compilers (120) zu extrahierenden Programm durch den Benutzer;
der Compiler (120) den kommentierten Programmcode einschließlich des ursprünglichen Codes (20) und der Anweisung des Compilers (120) kompilieren und während der Kompilierung die Anweisung des Compilers (120) verwenden soll, um zu bewirken, dass der notierte Bereich des ursprünglichen Codes (20) extrahiert wird, um den extrahierten Code (20b) zu erzeugen, der mit einem Funktionsaufruf verlinkt ist, der sich an einer Position in dem ursprünglichen Code (20) befindet, aus dem der extrahierte Bereich extrahiert wurde, und den verbleibenden ursprünglichen Code (20) des Programms zu instrumentieren, um Start- und End-Arbeitssätze zu speichern, die erforderlich sind, um den Bereich des extrahierten Codes (20b) in Form des Werts oder Zustands der verwendeten Variablen und Datenstrukturen auszuführen, und um ausführbaren Code umfassend den extrahierten Code (20b) und den instrumentierten Coden (20a) zu erzeugen;
die Zielnetzschnittstelle (16, 997) eine Änderung des extrahierten Codes (20b) von der lokalen Maschine (10) empfangen soll;
der Compiler (120) den modifizierten extrahierten Code erneut kompilieren soll, wenn er durch Empfang des modifizierten extrahierten Codes ausgelöst wird, und eine neue ausführbare Version des extrahierten Codes zum dynamischen Laden in den instrumentierten Code (20a) erzeugen soll;
der Zielprozessor (14, 140, 993) den instrumentierten Code (20a) ausführen und die neue ausführbare Version des extrahierten Codes dynamisch laden und ausführen soll; und
die Zielnetzwerkschnittstelle (16, 997) die Resultate zum Vergleich an die lokale Maschine (10) senden soll.

15. Computersystem, umfassend eine lokale Maschine (10) gemäß Anspruch 13 und eine Vielzahl von Zielmaschinen gemäß Anspruch 14.

## Revendications

1. Un procédé mis en oeuvre par ordinateur pour comparer les résultats, sur une pluralité de machines cibles, de la modification d'une région de code original (20), le procédé comprenant :
au niveau d'une machine locale (10), permettre à un utilisateur d'annoter une région de code original (20) dans un programme à extraire avec une directive de compilation (120) ;
la distribution du programme annoté de la machine locale (10) aux machines cibles ;
au niveau de chaque machine cible (100) et au niveau de la machine locale (10), la compilation du code de programme annoté comprenant le code original (20) et la directive de compilation (120), et pendant la compilation, la directive de compilation (120) provoquant l'extraction de la région annotée du code original (20) pour générer un code extrait (20b), qui est ensuite lié à un appel de fonction situé à une position dans le code original (20) à partir duquel la région extraite a été extraite, l'instrumentation du code original restant (20) du programme pour sauvegarder les ensembles de travail de départ et de fin nécessaires pour exécuter la région de code extrait sous la forme de la valeur ou de l'état des variables et des structures de données utilisées, et la génération d'un code exécutable comprenant le code extrait (20b) et le code instrumenté (20a) ;
permettre la modification par un utilisateur du code extrait (20b) au niveau de la machine locale (10) et l'envoi de la modification aux machines cibles, la modification déclenchant la recompilation du code extrait modifié au niveau de chaque machine cible (100) ;
au niveau de la machine locale (10), permettre la sélection par un utilisateur d'une ou plusieurs options qui sont envoyées aux machines cibles sous la forme de l'un quelconque d'un appel particulier du code extrait, d'une modification de l'ensemble de travail de départ, et d'un changement de l'ensemble de données initial du programme ;
au niveau de chaque machine cible (100), la génération d'une nouvelle version exécutable du code extrait pour un chargement dynamique dans le code instrumenté (20a) ; et
au niveau de chaque machine cible (100), l'exécution du code instrumenté (20a) et le chargement et l'exécution dynamiques de la nouvelle version exécutable du code extrait et l'envoi des résultats de chaque exécution individuelle à la machine locale (10), où les résultats sont reçus et affichés pour comparaison.

2. Un procédé selon la revendication 1, comprenant en outre le fait que chaque machine cible (100) reconvertit le code extrait (20b) dans sa forme de pré-compilation après l'extraction, et sauvegarde le code extrait (20b) pour la modification à distance et pour la recompilation avant l'exécution.

3. Un procédé selon la revendication 1 ou 2, comprenant en outre, après l'exécution du code extrait (20b), la sauvegarde des ensembles de travail de départ et de fin sous la forme de la valeur ou de l'état des variables et des structures de données utilisées.

4. Un procédé selon la revendication 3, comprenant en outre l'envoi des ensembles de travail de départ et de fin à partir de chaque machine cible (100) vers la machine locale (10) et le stockage d'une référence à chaque machine cible (100) avec les mêmes ensembles de travail de départ et de fin sur la machine locale (10) et également le stockage sur la machine locale (10) de tout ensemble de travail de départ et de fin différent avec une référence à la machine cible particulière (100) qui a produit les différents ensembles de travail de départ et de fin.

5. Un procédé selon l'une quelconque des revendications précédentes, comprenant en outre, avant toute exécution, l'envoi d'un ensemble de données pour l'exécution à partir de la machine locale (10) vers les machines cibles ou l'envoi d'une référence à un ensemble de données déjà disponible aux machines cibles, dans lequel un ensemble de données est une collection de données, ou des ensembles d'informations liées, qui est introduite dans un programme pour le traitement par le programme.

6. Un procédé selon l'une quelconque des revendications précédentes, comprenant en outre, au niveau de chaque machine cible (100), l'instrumentation du code extrait (20b) pour permettre une ou plusieurs exécutions simultanées contrôlées par l'utilisateur et la capture d'une ou plusieurs mesures de performance.

7. Un procédé selon la revendication 6, dans lequel l'exécution contrôlée par l'utilisateur prévoit une ou plusieurs des options suivantes : l'application de modifications à la région de code ; la sélection d'un appel du code extrait (20b) ;
la modification d'un ensemble de travail de départ ; la modification d'un ensemble de données pour l'exécution ; et
la sélection de différentes options pour différentes machines cibles.

8. Un procédé selon la revendication 6 ou 7, dans lequel l'exécution contrôlée par l'utilisateur renvoie à l'utilisateur le contrôle de l'exécution au niveau de chaque machine cible (100) après chaque instruction exécutée.

9. Un procédé selon l'une quelconque des revendications précédentes, comprenant en outre l'affichage de la région de code extrait (20b) sur la machine locale (10).

10. Un procédé selon l'une quelconque des revendications précédentes, comprenant en outre l'affichage des résultats sur la machine locale (10) en tant qu'ensembles de travail de fin et, éventuellement, un ou plusieurs parmi : des ensembles de travail de départ et une ou plusieurs mesures de performance pour chaque machine cible (100).

11. Un procédé mis en oeuvre par ordinateur au niveau d'une machine locale (10) pour comparer les résultats, sur une pluralité de machines cibles, de la modification d'une région de code original (20), le procédé comprenant :
permettre à un utilisateur d'annoter une région de code original (20) dans un programme à extraire avec une directive de compilation (120) ;
la distribution du programme annoté aux machines cibles ;
la compilation du code de programme annoté comprenant le code original (20) et la directive de compilation (120), et pendant la compilation, la directive de compilation (120) provoquant l'extraction de la région annotée du code original (20) pour générer le code extrait (20b), qui est ensuite lié à un appel de fonction situé à une position dans le code original (20) à partir duquel la région extraite a été extraite, l'instrumentation du code original restant (20) du programme pour sauvegarder les ensembles de travail de départ et de fin néces-saires pour exécuter la région de code extrait sous la forme de la valeur ou de l'état des variables et des structures de données utilisées, et la génération d'un code exécutable comprenant le code extrait (20b) et le code instrumenté (20a) ;
permettre à un utilisateur de modifier le code extrait et l'envoi de la modification aux machines cibles ;
la réception de chaque machine cible des résultats de chaque exécution individuelle de la machine cible exécutant le code instrumenté (20a) et le chargement et l'exécution dynamiques de la nouvelle version exécutable du code extrait ;
permettre la sélection par l'utilisateur d'une ou plusieurs options qui sont envoyées aux machines cibles sous la forme de l'un quelconque d'un appel particulier du code extrait, d'une modification de l'ensemble de travail de départ, et d'un changement de l'ensemble de données initial du programme ; et
l'affichage des résultats des machines cibles pour permettre la détermination des effets de la modification sur les résultats des différentes machines cibles.

12. Un procédé mis en oeuvre par ordinateur sur une machine cible pour permettre la comparaison des résultats, sur la machine cible, de la modification d'une région de code original (20) avec les résultats d'autres machines cibles, le procédé comprenant :
la réception d'un programme annoté à partir d'une machine locale (10), comprenant une région de code original (20) dans le programme annoté par un utilisateur à extraire avec une directive de compilation (120) ;
la compilation du code de programme annoté comprenant le code original (20) et la directive de compilation (120), et pendant la compilation, la directive de compilation (120) provoquant l'extraction de la région annotée du code original (20) pour générer le code extrait (20b), qui est lié à un appel de fonction situé à une position dans le code original (20) à partir duquel la région extraite a été extraite, l'instrumentation du code original restant (20) du programme pour sauvegarder les ensembles de travail de départ et de fin nécessaires pour exécuter la région de code extrait sous la forme de la valeur ou de l'état des variables et des structures de données utilisées par le code extrait (20b), et la génération d'un code exécutable comprenant le code extrait (20b) et le code instrumenté (20a), dans lequel ;
la réception d'une modification du code extrait (20b), la recompilation du code extrait modifié et la génération d'une nouvelle version exécutable du code extrait pour le chargement dynamique dans le code instrumenté (20a) ;
l'exécution du code instrumenté (20a) et le chargement et l'exécution dynamiques de la nouvelle version exécutable du code extrait et l'envoi des résultats à la machine locale (10) pour comparaison.

13. Une machine locale (10) utilisable pour comparer les résultats, sur une pluralité de machines cibles, de la modification d'une région de code original (20), dans laquelle :
la machine locale (10) comprend une interface utilisateur, un compilateur (120) et une interface réseau local (16, 997) commandée par un processeur local (14, 140, 993), dans laquelle :
l'interface utilisateur doit permettre l'annotation par l'utilisateur d'une région de code original (20) dans un programme à extraire avec une directive de compilation (120) ;
le compilateur (120) doit compiler le code de programme annoté comprenant le code original (20) et la directive de compilation (120), et pendant la compilation, utiliser la directive de compilation (120) pour provoquer l'extraction de la région annotée du code original (20) afin de générer le code extrait (20b), lié à un appel de fonction situé à une position dans le code original (20) à partir duquel la région extraite a été extraite, et pour instrumenter le code original restant (20) du programme afin de sauvegarder les ensembles de travail de départ et de fin nécessaires pour exécuter la région de code extrait (20b) sous la forme de la valeur ou de l'état des variables et des structures de données utilisées, et pour générer un code exécutable sous la forme du code extrait (20b) et du code instrumenté (20a) ; et
l'interface réseau local (16, 997) doit distribuer le programme annoté à partir de la machine locale (10) vers les machines cibles ;
l'interface utilisateur doit permettre à l'utilisateur de modifier le code extrait, d'envoyer la modification de l'utilisateur aux machines cibles ; et de recevoir les résultats de l'exécution sur chaque machine cible ;
l'interface utilisateur doit permettre la sélection d'une ou plusieurs options qui sont envoyées aux machines cibles sous la forme d'un appel particulier du code extrait, d'une modification de l'ensemble de travail de départ, et d'un changement de l'ensemble de données initial du programme ; et
l'interface utilisateur doit afficher les résultats pour comparaison par l'utilisateur.

14. Une machine cible pour permettre la comparaison des résultats, sur la machine cible, de la modification d'une région de code original (20) avec les résultats d'autres machines cibles, dans laquelle :
la machine cible comprend un compilateur (120) et une interface réseau cible (16, 997) commandée par un processeur cible (14, 140, 993), dans laquelle :
l'interface réseau cible (16, 997) doit recevoir un programme annoté, comprenant l'annotation par l'utilisateur d'une région de code original (20) dans le programme à extraire avec une directive de compilation (120) ;
le compilateur (120) doit compiler le code de programme annoté comprenant le code original (20) et la directive de compilation (120), et pendant la compilation, utiliser la directive de compilation (120) pour provoquer l'extraction de la région annotée du code original (20) afin de générer le code extrait (20b), qui est lié à un appel de fonction situé à une position dans le code original (20) à partir duquel la région extraite a été extraite, et pour instrumenter le code original restant (20) du programme afin de sauvegarder les ensembles de travail de départ et de fin nécessaires pour exécuter la région de code extrait (20b) sous la forme de la valeur ou de l'état des variables et des structures de données utilisées, afin de générer un code exécutable comprenant le code extrait (20b) et le code instrumenté (20a) ;
l'interface réseau cible (16, 997) doit recevoir une modification du code extrait (20b) de la machine locale (10) ;
le compilateur (120) doit recompiler le code extrait modifié lorsqu'il est déclenché par la réception du code extrait modifié et générer une nouvelle version exécutable du code extrait pour le chargement dynamique dans le code instrumenté (20a) ;
le processeur cible (14, 140, 993) doit exécuter le code instrumenté (20a) et charger et exécuter dynamiquement la nouvelle version exécutable du code extrait ; et
l'interface réseau cible (16, 997) doit envoyer les résultats à la machine locale (10) pour comparaison.

15. Un système informatique comprenant une machine locale (10) selon la revendication 13 et une pluralité de machines cibles selon la revendication 14.
